# EUROPÄISCHE PATENTSCHRIFT

(11) **EP 3 600 950 B1**
(45) Veröffentlichungstag und Bekanntmachung des Hinweises auf die Patenterteilung: **24.08.2022**
(21) Anmeldenummer: 18713174.3
(22) Anmeldetag: 19.03.2018
(51) Int. Cl.: B60L 50/50, B60L 53/14, B60L 53/30, B60L 53/35, B60L 53/65, H01R 13/631

(54) **UNTERFLUR-KONTAKTSYSTEM**
UNDERFLOOR CONTACTING SYSTEM
SOUS-SOL SYSTÈME DE CONTACTS

(30) Priorität: 20.03.2017 DE 102017204608; 12.10.2017 DE 102017218226
(43) Veröffentlichungstag der Anmeldung: 05.02.2020
(60) Teilanmeldung: 22185555.4
(73) Patentinhaber: Fraunhofer-Gesellschaft zur Förderung der angewandten Forschung e.V., 80686 München (DE)
(72) Erfinder: KLAUSNER, Sven, 01099 Dresden (DE); VORWERK, Tim, 01109 Dresden (DE); SEILER, Christian, 01277 Dresden (DE)
(74) Vertreter: Pfenning, Meinig & Partner mbB
(86) Internationale Anmeldenummer: PCT/EP2018/056911
(87) Internationale Veröffentlichungsnummer: WO 2018/172294

(56) Entgegenhaltungen:
- EP-A1- 2 841 296
- EP-A2- 2 379 365
- EP-B1- 2 379 365
- EP-B1- 2 841 296
- CN-A- 105 128 686
- DE-A1- 2 330 255
- JP-A- 2005 255 144
- JP-A- 2015 186 310
- US-A1- 2011 066 515
- US-A1- 2011 133 692

## Beschreibung

Die Erfindung liegt auf dem Gebiet des Maschinenbaus und der Elektrotechnik und ist mit besonderem Vorteil auf dem Gebiet der Automobiltechnik anwendbar.

In den zurückliegenden Jahren konnten große Fortschritte bei der Weiterentwicklung vor allem Lithium-basierter Batterietechnologie hinsichtlich der Erhöhung von deren Energiedichte (Batteriezellen mit ausreichend hoher Energiedichte, Lösung des "Reichweitenproblems") und der Systemintegration verzeichnet werden. Für immer weitergehende Anwendungen stehen somit heute Batteriezellen mit ausreichend hoher Energiedichte und auf deren Basis zuverlässige und sichere Batteriesysteme zur Verfügung. Vor diesem Hintergrund ist die rasch anwachsende Anzahl kommerziell verfügbarer, rein batterieelektrisch betriebener Fahrzeuge für den innerstädtischen und suburbanen Lieferverkehr bis hin zum Individualverkehr eine nur allzu logische Konsequenz.

Eine notwendige Bedingung für die Realisierung batterieelektrischer Antriebskonzepte ist die Verfügbarkeit ausreichend großer Zeitreserven zur Nach- bzw. Wiederaufladung des Batteriespeichers durch Ausnutzung betriebs- oder nutzungsbedingter Stillstandszeiten (Pausen). Durch die Begrenztheit dieser Zeitreserven besteht die einzige Möglichkeit zur Erschließung weiterer Anwendungsszenarien in der Weiterentwicklung der Schnellladefähigkeit des Batteriespeichers und der zugehörigen Ladeinfrastruktur.

Die zu erwartenden Fortschritte hinsichtlich erhöhter Leistungsdichten von Batteriespeichersystemen führen bereits heute zu steigenden Laderaten. Die Laderate (xC) ist ein Maß für das Verhältnis des maximal möglichen Ladestroms (in A) bezogen auf die Nennkapazität (in Ah). Da die Batteriesystemspannung durch das Ladesystem für den Ladevorgang zwangsläufig zur Verfügung gestellt werden muss, stellt die Laderate einen direkten Ausdruck dafür dar, wie schnell der Batteriespeicher aufgeladen werden kann. Mit der technischen Einschränkung, dass der Batteriespeicher nicht in den Speicherladezuständen der Tiefentladung sowie der Ladeschlussspannung mit dem maximalen Ladestrom beaufschlagt werden kann, ist die zuvor getroffene Aussage zumindest über einen sehr großen Bereich der Gesamtkapazität gültig. Als Stand der Technik sind bereits heute Batteriespeichersysteme mit Laderaten von 5C kommerziell verfügbar, was bedeutet, dass diese mit Ladeströmen beaufschlagt werden können, mit denen innerhalb von 12 Minuten ein Großteil von deren Gesamtkapazität eingespeichert werden kann.

Unter der aus dem Stand der Technik abgeleiteten Annahme, dass ausreichend leistungsdichte Batteriespeicher zur Verfügung stehen, kann die technische Qualifizierung der an der Energieübertragung beteiligten Leistungselektronik ein weiteres Hemmnis zur Ausbildung von Schnellade-technologie mit den benötigten technischen Parametern darstellen.

Momentan werden zwei physikalische Grundprinzipien zur Ausführung automatisierter Systeme für die Nachladung von Batteriefahrzeugen diskutiert und technisch umgesetzt, die induktive, also berührungslose sowie die konduktive, also kontaktbasierte Energieübertragung, auf die bei der hier beschriebenen Erfindung Bezug genommen wird.

Aus der US 2015 /0306974 A1 ist eine Ladeeinrichtung für elektrisch betriebene Fahrzeuge bekannt, bei der ein elektrischer Verbinder aus einem Unterbodensystem an ein Fahrzeug angedockt wird, wobei gleichzeitig eine Verbindung zur thermischen Stabilisierung der Fahrzeugseite während des Ladevorgangs hergestellt wird.

Aus der DE 697 11 963 T2 ist ein induktives Ladesystem für elektrische Fahrzeuge mit einem an das Fahrzeug andockbaren induktiven Ladekopf bekannt.

Aus der US 2009/0079270 A1 ist ein induktives Ladesystem mit einer Positionsbestimmung der induktiven Koppelelemente relativ zueinander bekannt.

Aus der JP 2015-186310 A ist ein induktives Unterflur-Ladesystem für Fahrzeuge bekannt.

Die DE 10 2011 082 092 A1 offenbart eine Führungseinrichtung für einen Ladestecker bei einer Ladeeinrichtung für Fahrzeuge.

Die JP 2006-081310 A zeigt eine elektrische Einspeisevorrichtung mit Kontakten, die verschiebbar und gegenüber einer Steckrichtung schwenkbar sind.

Aus der US 2010/0235006 A1, sowie aus US 2011/066515 A1, CN 105 128686 A, JP 2005-255144 A und DE 2330255 A1 geht jeweils eine Ladeeinrichtung für Fahrzeuge mit einer Positioniereinrichtung hervor.

Die WO 2015/112355 A1 zeigt eine mechanische Führungs- und Zentriereinrichtung für einen elektrischen Stecker, der mit einem Ladekabel verbunden ist.

Aus der DE 10 2011 077 427 A1 geht eine induktive Ladeeinrichtung mit einem schwimmend gelagerten Ladekopf hervor.

Vor dem Hintergrund des Standes der Technik liegt der Erfindung die Aufgabe zugrunde, eine Einrichtung zu schaffen, die die konduktive (kontaktbasierte)

Energieübertragung von einer Ladestation zu einem Fahrzeug und zu einem in dem Fahrzeug befindlichen Energiespeicher mit hohem Ladestrom ermöglicht. Dabei soll ein Kontaktsystem möglichst selbsttätig und ohne manuellen Eingriff funktionieren.

Diese Aufgabe wird durch eine Ladekontakteinheit nach Anspruch 1 gelöst. Insbesondere bezieht sich die Erfindung auf eine Ladekontakteinheit für ein Fahrzeug mit mindestens einem elektrisch aufzuladenden Energiespeicher zum Einbau unterhalb einer Fahrbahnoberfläche mit einem Ladekontaktelementträgerkopf, der zum Zusammenwirken mit einer Kontaktvorrichtung an der Unterseite eines Fahrzeugs eingerichtet ist, wobei die Kontaktgabe und die Kontakttrennung durch eine Relativbewegung des Ladekontaktelementträgerkopfes und der Kontaktvorrichtung entlang einer Kontaktierungsrichtung erfolgt, wobei der Ladekontaktelementträgerkopf zum Ausgleich von Fehlpositionierungen entweder in einer oder mehreren quer zur Kontaktierungsrichtung verlaufenden Richtungen innerhalb der Ladekontakteinheit verschiebbar und/oder um die Kontaktierungsrichtung dreh- oder schwenkbar ist, und mit einer Hubvorrichtung zum Anheben des Ladekontaktelementträgerkopfes, wobei in der Betriebsposition eine von der Hubvorrichtung unabhängige Haltevorrichtung zum Halten des Ladekontaktelementträgerkopfes an der Kontaktvorrichtung in Form einer magnetischen Haltevorrichtung, vorgesehen ist, und wobei die magnetische Haltevorrichtung ein magnetisches Haltestück oder einen Elektromagneten am Ladekontaktelementträgerkopf aufweist, der dazu eingerichtet ist, mit einem Gegenstück an der Kontaktvorrichtung zusammenzuwirken und eine Verriegelung (kraftschlüssige, wieder lösbare Verbindung) beider Teile zu erreichen, und wobei die Hubvorrichtung derart eingerichtet ist, dass sie die Abwärtsbewegung des Ladekontaktelementträgerkopfes und der mit diesem in die Betriebsposition bewegbaren Teile aus der Betriebsposition ohne einen Antrieb ermöglicht, wobei die Hubvorrichtung von dem Ladekontaktelementträgerkopf und den mit diesem in die Betriebsposition bewegbaren Teilen mechanisch entkoppelbar ist.

Unter der Ladekontakteinheit wird dabei die wegseitige, d. h. fest installierte Einheit der Ladeeinrichtung verstanden, an die sich ein Fahrzeug zum Aufladen annähert, um einen elektrisch leitenden Kontakt zum Transport des Ladestroms herzustellen. Die Ladekontakteinheit wird üblicherweise in einem Schacht unterhalb der Fahrbahnoberfläche eingebaut und ist mit einer Energiequelle, beispielsweise einem elektrischen Versorgungsnetz, verbunden.

Den Kontakt zu elektrischen Leitungen im Fahrzeug stellen dabei Ladekontaktelemente her, die mit Kontaktelementen der fahrzeugseitigen Kontaktvorrichtung in elektrisch leitende Verbindung treten. Diese elektrisch leitende Verbindung kann als Steck- oder Klemmkontakt hergestellt werden, es ist jedoch, wie im Zusammenhang mit der vorliegenden Erfindung vorzugsweise angenommen, auch die Kontaktherstellung mittels eines Druckkontakts möglich. Dazu wird ein ausreichender Druckkontakt zwischen den Kontaktelementen hergestellt.Außer den Kontaktelementen für die Ladestromführung können zur Erfüllung der normativen Vorgaben hinsichtlich der Ausbildung von Kontaktpaarungen

Außer den Kontaktelementen für die Ladestromführung können zur Erfüllung der normativen Vorgaben hinsichtlich der Ausbildung von Kontaktpaarungen zur Nachladung eines Fahrzeugenergiespeichers üblicherweise noch weitere Kontaktelemente vorgesehen sein, wie beispielsweise ein Schutzleiter sowie ein oder mehrere Steuerkontakte. Es kann durch geeignete Anordnung der Kontaktelemente eine bestimmte Reihenfolge bei der Kontaktgabe und beim Lösen der Kontakte vorgegeben werden.

Ein Vorteil der vorliegenden Erfindung liegt darin, dass wesentliche bewegte und anzutreibende Teile des Systems zur Herstellung des Ladekontakts in der Ladekontakteinheit wegseitig und fest installiert vorgesehen werden, so dass entsprechende Kontaktvorrichtungen auf der Fahrzeugseite einfach gehalten werden können. Ein Ladekontaktelementträgerkopf wird mittels eines Antriebs in der Ladekontakteinheit auf eine Kontaktvorrichtung eines Fahrzeugs zu bewegt werden, um die Kontaktelemente der Ladekontakteinheit einerseits und der Kontaktvorrichtung des Fahrzeugs andererseits in Kontakt zu bringen. Fahrzeugseitig muss dann kein Antrieb für Teile der Kontaktvorrichtung vorgesehen werden.

Mit dem Ladekontaktelementträgerkopf kann ein Element zum Wärmeaustausch verbunden sein, das im Zuge der Kontaktgabe des Ladekontaktelementträgerkopfes an der Kontaktvorrichtung eines Kraftfahrzeugs mit einem fahrzeugseitigen Wärmetauschelement in Wechselwirkung tritt, um einen Wärmetausch zu ermöglichen. Ein solches Element kann als Leitung für ein Wärmetauschfluid mit einem entsprechenden Verbindungsanschluss oder als Wärmeleitelement in Form eines Körpers, der ohne Bewegung eines Trägermediums Wärme aufnehmen und insbesondere ableiten kann, ausgebildet sein.

Es ist jedoch vorteilhaft, da eine genaue Positionierung der Kontaktvorrichtung des Fahrzeugs relativ zur Ladekontakteinheit üblicherweise nicht gelingt, Fehlausrichtungen auszugleichen. Dies gelingt dadurch, dass der Ladekontaktelementträgerkopf quer zur Kontaktierungsrichtung verschiebbar und/oder um die Kontaktierungsrichtung dreh- oder schwenkbar ist. Für den Ausgleich der Fehlpositionierung kann ein gesonderter Antrieb des Ladekontaktelementträgerkopfs vorgesehen werden, der mit einer Sensorik verbunden ist, welche die Fehlpositionierung erfasst, wobei durch eine Steuereinrichtung mittels des Antriebs für einen Ausgleich der Fehlpositionierung gesorgt wird. Es ist jedoch auch möglich, den Ladekontaktelementträgerkopf und die Kontaktvorrichtung derart auszubilden, dass sie sich gegenseitig nach Art einer Kontaktfangvorrichtung selbst justieren. Dazu ist eines der Teile in wenigstens einer Querschnittsrichtung derart ausgebildet, dass der Querschnitt sich auf das andere Element zulaufend verjüngt, während das andere Element zumindest in derselben Querschnittsrichtung formkomplementär ausgebildet ist.

Der einfachste Fall ist dabei, dass eines der Elemente, der Ladekontaktelementträgerkopf oder die Kontaktvorrichtung, konisch oder nach Art einer Pyramide oder eines Kegelstumpfs/Pyramidenstumpfs ausgebildet ist, während das andere Element einen entsprechenden Hohlkonus oder eine zu einem Pyramidenstumpf komplementäre Aufnahme aufweist. Eine solche Ausbildung wäre in mehreren Querschnittsrichtungen formkomplementär und sich verjüngend zulaufend ausgebildet. Es kann jedoch auch ausreichend sein, wenn eine solche formkomplementäre Ausbildung nur in einer Querschnittsrichtung verwirklicht ist. Mit einer sich verjüngend zulaufenden Querschnittsform kann in diesem Zusammenhang außer einer konischen oder pyramidenstumpfförmigen Ausbildung auch eine kugelkalottenförmige Ausbildung eines der Teile und eine hohlkalottenförmige Ausbildung des jeweils anderen Teils gemeint sein.

Der Effekt dieser formkomplementären Ausbildung liegt darin, dass bei einer Fehlpositionierung das eine der Teile, entweder der Ladekontaktelementträgerkopf oder die Kontaktvorrichtung, bei einer Relativbewegung der beiden Teile zur Kontaktgabe durch ein Gleiten an Führungsflächen des jeweils anderen Teils justiert und in einer Richtung senkrecht zur Kontaktierungsrichtung verschoben oder gedreht wird, so dass bei der Kontaktgabe eine optimierte Positionierung der Teile und der Kontaktelemente zueinander gegeben ist.

Es kann dabei vorteilhaft vorgesehen sein, dass eine Verschiebbarkeit im Sinne einer translatorischen Bewegung senkrecht zur Kontaktierungsrichtung bei einem der Teile - Ladekontaktelementträgerkopf oder der Kontaktvorrichtung - und eine Verdrehbarkeit um die Kontaktierungsrichtung bei dem jeweils anderen Teil vorgesehen ist. Damit wird unter anderem auch vermieden, dass eines der Teile sowohl verschiebbar als auch verdrehbar sein muss.

Es kann jedoch auch vorgesehen sein, dass sowohl die Verschiebbarkeit als auch eine Verdrehbarkeit bei einem der Teile, beispielsweise beim Ladekontaktelementträgerkopf vorgesehen ist.

Eine vorteilhafte Ausgestaltung der Erfindung liegt darin, dass der Ladekontaktelementträgerkopf gegen eine elastische Rückstellkraft verdreh- oder verschiebbar ist. Elastische Rückstellkräfte können dabei durch elastische Elemente in Form von Federn oder Elastomerelementen realisiert sein, die einerseits mit dem Ladekontaktelementträgerkopf und andererseits mit einem ortsfesten Teil der Ladekontakteinrichtung verbunden sind.

Eine weitere vorteilhafte Ausgestaltung der Erfindung liegt darin, dass der Ladekontaktelementträgerkopf auf einem Ladekontaktelementträgerpodest oder Zwischenpodest in einer ersten Richtung verschiebbar gelagert ist und dass das Ladekontaktelementträgerpodest oder Zwischenpodest innerhalb der Ladekontakteinheit in einer zweiten Richtung verschiebbar gelagert ist. Das Ladekontaktelementträgerpodest oder Zwischenpodest ist üblicherweise unterhalb des Ladekontaktelementträgerkopfes angeordnet und seinerseits vorteilhaft in der Kontaktierungsrichtung antreibbar. Hierzu ist, wie weiter unten ausgeführt, vorteilhaft eine Hubvorrichtung der Ladekontakteinheit innerhalb des Schachtes vorgesehen.

Eine weitere vorteilhafte Ausgestaltung der Ladekontakteinheit sieht vor, dass der Ladekontaktelementträgerkopf auf dem Ladekontaktelementträgerpodest oder Zwischenpodest mittels eines Drehlagerelementes gelagert ist, wobei zwischen dem Drehlagerelement und dem Ladekontaktelementträgerkopf ein Drehlager angeordnet ist. Damit wird der Ladekontaktelementträgerkopf gleichzeitig sowohl verschiebbar als auch drehbar. Damit ist eine Beweglichkeit der Kontaktvorrichtung im Fahrzeug nicht mehr notwendig, auch wenn sie zusätzlich vorgesehen sein kann.

Es kann zudem vorgesehen sein, dass an dem Ladekontaktelementträgerkopf eine oder mehrere Einlaufschräge(n) angeordnet sind, die bei der vertikalen Aufwärtsbewegung des Ladekontaktelementträgerkopfes ein oder mehrere Abdeckelemente oder Abdeckelementträger einer Fahrbahnabdeckung in horizontaler Richtung auslenkt/auslenken, so dass der Austritt des Ladekontaktelementträgers aus der Fahrbahnoberfläche bis zum Kontaktschluss mit einer Kontaktvorrichtung ermöglicht wird.

Es ist bei dieser Ausgestaltung eine Fahrbahnabdeckung vorgesehen, die in einer Ruheposition die Ladekontakteinheit an der Oberseite unter Ausbildung einer Fahrbahnfortsetzung abdeckt und die in einer Betriebsposition eine Öffnung oberhalb des Ladekontaktelementträgerkopfes freigibt. Hierzu sind ein oder mehrere Abdeckelementträger mit Abdeckelementen vorgesehen, die beim Ausfahren des Ladekontaktelementträgerkopfes horizontal auslenkbar und damit verfahrbar sind und eine Öffnung für den Ladekontaktelementträgerkopf freigeben.

Die Fahrbahnabdeckung ist üblicherweise so gestaltet, dass sie in der Ruheposition, wenn kein Fahrzeug geladen wird, geschlossen ist. Die Fahrbahnabdeckung bildet dann eine Fahrbahnfortsetzung in der Ebene der Fahrbahn und ist vorteilhaft auch derart belastbar, dass sie von Fahrzeugen überfahren werden kann. Die Fahrbahnabdeckung weist im vorliegenden Fall Abdeckelemente auf, die von Abdeckelementträgern getragen sind und die ausschließlich durch eine Schubbewegung des Ladekontaktträgerelementkopfes in die Betriebsposition horizontal verfahrbar sind. Die Abdeckelemente können auch eine oder mehrere Klappen aufweisen, die ausschließlich durch eine Schubbewegung des Ladekontaktträgerelementkopfes in die Betriebsposition schwenkbar sind. Dies bedeutet, dass auf einen separaten Antrieb der Fahrbahnabdeckung, verzichtet werden kann. Dadurch werden der konstruktive Aufwand und die Fehleranfälligkeit der Ladekontakteinheit gesenkt.

Alternativ ist es auch denkbar, für die Abdeckelemente der Fahrbahnabdeckung einen separaten, gesteuerten Antrieb vorzusehen, der ausgelöst werden kann, sobald ein Fahrzeug sich oberhalb der Ladekontakteinheit an einer geforderten Position befindet, so dass die freigegebene Öffnung zur Ladekontakteinheit und zu dem Ladekontaktelementträgerkopf durch das Fahrzeug geeignet abgeschirmt ist, so dass Personen, die sich im Bereich des Fahrzeugs bewegen, nicht in Gefahr geraten.

Wird die Fahrbahnabdeckung ausschließlich durch den bewegten Ladekontaktelementträgerkopf oder andere Teile der Ladekontakteinheit angetrieben, die im Zuge einer Kontaktgabe bewegt werden, so ist automatisch sichergestellt, dass die Fahrbahnabdeckung nur dann geöffnet wird, wenn sich ein Fahrzeug über der Ladekontakteinheit befindet. Ein Antrieb des Ladekontaktelementträgerkopfes wird üblicherweise durch eine Steuereinrichtung davon abhängig eingeleitet, dass mittels einer Markierung und durch eine Sensoreinrichtung fahrzeugseitig oder ladekontakteinheitsseitig sichergestellt ist, dass sich ein Fahrzeug in der Ladeposition oberhalb der Ladekontakteinheit befindet. Dies kann auch dadurch gefördert werden, dass auf der Fahrbahnoberfläche Ausnehmungen oder Erhöhungen, Nuten, Rillen, Stege oder Wülste vorgesehen sind, die entweder die Räder eines Fahrzeugs führen oder stoppen oder dem Fahrer des Fahrzeugs bei ihrem Überfahren durch Erschütterung des Fahrzeugs ein Signal geben. Damit kann eine gute Anfangspositionierung des Fahrzeugs relativ zur Ladekontakteinheit sichergestellt werden.

Es kann außerdem in einer vorteilhaften Ausgestaltung der Erfindung vorgesehen sein, dass eine Hubvorrichtung (Hubmechanik) zum Anheben des Ladekontaktelementträgerkopfes vorgesehen ist, die insbesondere elektrisch, hydraulisch oder pneumatisch ausgebildet ist. Die Hubvorrichtung/Hubmechanik kann beispielsweise mittels eines Motors und eines Getriebes eine Zahnstange in vertikaler Richtung antreiben, an der das Ladekontaktelementträgerpodest befestigt ist.

Es ist vorgesehen, dass in der Betriebsposition eine von der Hubvorrichtung unabhängige Haltevorrichtung zum Halten des Ladekontaktelementträgerkopfes an der Kontaktvorrichtung in Form einer magnetischen Haltevorrichtung vorgesehen ist. Diese Haltevorrichtung sorgt dafür, dass in der Betriebsposition ein ausreichender Kontaktdruck der Ladekontaktelemente zu den Kontaktelementen der Kontaktvorrichtung gegeben ist, um den elektrischen Übergangswiderstand zu minimieren. Eine solche Haltevorrichtung kann eine Verriegelung sowie elastische Elemente zum Zusammendrücken der elektrischen Kontakte enthalten.

Es ist auch vorgesehen, dass die magnetische Haltevorrichtung ein magnetisches Haltestück oder einen Elektromagneten am Ladekontaktelementträgerkopf aufweist, der dazu eingerichtet ist, mit einem Gegenstück an der Kontaktvorrichtung zusammenzuwirken, wobei das magnetische Haltestück oder der Elektromagnet insbesondere mit einem Hilfskontakt, insbesondere einem Steuerkontakt, konstruktiv vereinigt ist. Durch eine geeignete Ansteuerung des Elektromagneten entweder auf der Seite der Kontaktvorrichtung oder auf der Seite der Ladekontakteinheit wird der elektrische Kontakt gehalten. Wird der Elektromagnet abgeschaltet, so kann eine Kontakttrennung eingeleitet werden. Der Steuerkontakt kann insbesondere dafür genutzt werden, die störungslose Kontaktgabe zu erfassen und Signale an eine Steuereinrichtung für den Betrieb des Elektromagneten zu geben.

Es kann beispielsweise vorgesehen sein, dass die Haltekräfte zur Herstellung der elektrischen Verbindung zwischen der Ladekontakteinheit und der Kontaktvorrichtung ausschließlich durch die magnetische Haltevorrichtung aufgebracht werden. Dies kann dazu führen, dass bei Abschalten des Elektromagneten die beweglichen Teile der Ladekontakteinheit in die Ruheposition zurückfallen. Damit ist gewährleistet, dass beispielsweise bei Beendigung des Ladevorgangs die Ladekontakteinheit auch im Störungsfall in eine Ruheposition zurückfällt, ohne dass es einer aktiven Beteiligung der Ladekontakteinheit bedarf, beispielsweise bei einem Ausfall des Versorgungsnetzes. Der Ladekontaktelementträgerkopf kann dann in den Schacht zurückfallen, und die Fahrbahnabdeckung fällt ebenfalls in die Ruheposition zurück.

Es kann weiter vorteilhaft vorgesehen sein, dass eine Stoßdämpfvorrichtung zur Dämpfung einer Fallbewegung des Ladekontaktelementträgerkopfes und der mit diesem in die Betriebsposition bewegbaren Teile vorgesehen ist. Damit kann verhindert werden, dass Teile der Ladekontakteinheit beim Zurückfallen in eine Ruheposition Schaden nehmen. Die Stoßdämpfvorrichtung kann einen pneumatischen oder hydraulischen Stoßdämpfer sowie ein elastisches Federelement aufweisen. Sie ist üblicherweise unterhalb des Ladekontaktelementträgerkopfes, insbesondere unterhalb des Ladekontaktelementträgerpodestes, im Bereich der Hubvorrichtung angeordnet.

Es ist vorgesehen, dass die Hubvorrichtung derart eingerichtet ist, dass sie die Abwärtsbewegung des Ladekontaktelementträgerkopfes und der mit diesem in die Betriebsposition bewegbaren Teile aus der Betriebsposition ohne einen Antrieb ermöglicht, wobei die Hubvorrichtung insbesondere von dem Ladekontaktelementträgerkopf und den mit diesem in die Betriebsposition bewegbaren Teilen mechanisch entkoppelbar ist. Dies kann dadurch realisiert sein, dass die Hubvorrichtung nicht selbsthemmend ausgebildet ist und/oder von den anzutreibenden Teilen entkoppelbar ist.

Außerdem kann vorteilhaft vorgesehen sein, dass das Kontaktsystem, insbesondere die Ladekontakteinheit, eine Sensoreinrichtung aufweist, die dazu eingerichtet ist, die Position einer Kontaktvorrichtung eines Fahrzeugs relativ zur Ladekontakteinheit, insbesondere relativ zu dem Ladekontaktelementträgerkopf, zu erfassen. Die Kontaktvorrichtung des Fahrzeugs oder das Fahrzeug selbst kann hierzu eine durch die Sensoreinrichtung wahrnehmbare Markierung tragen, die sich innerhalb eines Referenzbereichs der Ladekontakteinheit befinden muss, um ein Ausfahren des Ladekontaktelementträgerkopfes freizugeben. Die Sensoreinrichtung kann optisch, elektrisch, magnetisch ausgebildet sein oder auch in Form einer Infraroteinrichtung.

Die Sensoreinrichtung kann auch fahrzeugseitig vorgesehen sein, wobei dann durch die Sensoreinrichtung eine Markierung an der Ladekontakteinheit zu erfassen ist. In diesem Fall kann eine fahrzeugseitige Steuereinrichtung entsprechende Signale zur Freigabe an die Ladekontakteinheit senden.

Die Erfindung bezieht sich außer auf eine Ladekontakteinheit der oben erläuterten Art auch auf ein Kontaktsystem mit einer Ladekontakteinheit der oben beschriebenen Art und einer Kontaktvorrichtung in einem Fahrzeug, dadurch gekennzeichnet, dass in dem Fall, dass der Ladekontaktelementträgerkopf in einer oder mehreren quer zur Kontaktierungsrichtung verlaufenden Richtungen innerhalb der Ladekontakteinheit verschiebbar ist, die Kontaktvorrichtung um die Kontaktierungsrichtung dreh- oder schwenkbar ist und dass in dem Fall, in dem der Ladekontaktträgerelementkopf um die Kontaktierungsrichtung dreh- oder schwenkbar ist, die Kontaktvorrichtung in einer oder mehreren quer zur Kontaktierungsrichtung verlaufenden Richtungen relativ zu dem Fahrzeug verschiebbar ist.

Es kann jedoch auch vorgesehen sein, dass der Ladekontaktelementträgerkopf in einer oder mehreren Richtungen innerhalb der Ladekontakteinheit verschiebbar und auch verdrehbar ist. Die Kontaktvorrichtung kann dabei fest und weder verschiebbar noch verdrehbar sein oder auch verschiebbar und/oder verdrehbar.

Zudem kann vorteilhaft vorgesehen sein, dass die Kontaktvorrichtung gegen eine elastische Rückstellkraft verdreh- oder verschiebbar ist.

Wie oben erläutert, kann zudem vorgesehen sein, dass die Kontaktvorrichtung eine Sensoreinrichtung aufweist, die dazu eingerichtet ist, die Position einer Ladeeinheit, insbesondere eines Ladekontaktelementträgerkopfes, relativ zur Kontaktvorrichtung zu erfassen.

Die Erfindung bezieht sich weiter auf eine Fahrbahnabdeckung für ein Kontaktsystem mit einer Ladekontakteinheit, die einen vertikal antreibbaren Ladekontaktelementträgerkopf aufweist, insbesondere einer Ladekontakteinheit gemäß der oben stehenden Beschreibung, und einer fahrzeugseitigen Kontaktvorrichtung für elektrisch angetriebene und mit jeweils mindestens einem elektrisch aufzuladenden Energiespeicher versehene Fahrzeuge, wobei die Fahrbahnabdeckung in einer Vertiefung unterhalb einer Fahrbahnoberkante angeordnet ist, wobei die Fahrbahnabdeckung durch einen Anschlussrahmen mit einem Schachtelement verbunden ist, wobei die Fahrbahnabdeckung eine oder mehrere Abdeckelemente umfasst, die an dem Anschlussrahmen gegen elastische Rückstellkräfte reversibel beweglich gelagert sind, wobei die Abdeckelemente relativ zu einem Ladekontaktelementträgerkopf der Ladekontakteinheit so angeordnet sind, dass der Ladekontaktelementträgerkopf bei seiner vertikalen Aufwärtsbewegung ein oder mehrere Abdeckelemente aus einer Verschlussposition auslenkt und so der Austritt des Ladekontaktelementträgers aus der Fahrbahnoberfläche bis zum Kontaktschluss mit einer Kontaktvorrichtung ermöglicht wird. Die Abdeckelemente können dabei unmittelbar durch den Ladekontaktelementträgerkopf ausgelenkt werden oder es können auch Abdeckelementträger durch den Ladekontaktelementträgerkopf ausgelenkt werden, wodurch die Abdeckelemente mit bewegt werden.

Damit ist für das Ausfahren des Ladekontaktelementträgerkopfes mit Ladekontaktelementen zu einer gegenüberliegenden fahrzeugseitigen Kontaktvorrichtung nur der Antrieb des Ladekontaktelementträgerkopfes notwendig und die Öffnung der Abdeckelemente ergibt sich selbsttätig ohne dass hierfür ein eigener Antrieb vorgesehen sein muss.

Es ist vorgesehen, dass die Fahrbahnabdeckung eine oder mehrere Abdeckelementträger umfasst, die an dem Anschlussrahmen gegen elastische Rückstellkräfte reversibel verschiebbar gelagert sind, wobei die Abdeckelementträger Abdeckelemente tragen und relativ zu einem Ladekontaktelementträgerkopf der Ladekontakteinheit so angeordnet sind, dass eine oder mehrere an dem Ladekontaktelementträgerkopf angeordnete Einlaufschräge(n) bei der vertikalen Aufwärtsbewegung des Ladekontaktelementträgerkopfes ein oder mehrere Abdeckelementträger in horizontaler Richtung auslenkt/auslenken und so der Austritt des Ladekontaktelementträgers aus der Fahrbahnoberfläche bis zum Kontaktschluss mit einer Kontaktvorrichtung ermöglicht wird.

Die Abdeckelementträger und die Abdeckelemente sind vorteilhaft horizontal parallel zur Fahrbahnoberfläche translatorisch verschiebbar. Sie sind innerhalb eines Anschlussrahmens in ihrer Bewegung geführt, beispielsweise in einer oder mehreren Schienen. Beim Zurückziehen des Ladekontaktelementträgerkopfes werden die Abdeckelementträger selbsttätig durch elastische Elemente (Federelemente) wieder in die Verschlussposition bewegt, in der die Abdeckelemente die Öffnung in der Fahrbahnabdeckung verschließen. Die Abdeckelemente sind mit den Abdeckelementträgern fest mittels elastischer Elemente verbunden, die eine begrenzte Relativbewegung von Abdeckelementen und Abdeckelementträgern zulassen.

Außerdem kann in einer Implementierung vorgesehen sein, dass an einem oder mehreren Abdeckelementträgern jeweils wenigstens ein Gleit- oder Abrollelement angeordnet ist, das im Verlauf der vertikalen Aufwärtsbewegung des Ladekontaktelementträgerkopfes an einer an dem Ladekontaktelementträgerkopf angeordneten Einlaufschräge abrollt oder gleitet und dadurch gemeinsam mit dem jeweiligen Abdeckelementträger in Horizontalrichtung angetrieben wird.

Eine weitere mögliche Ausführungsform kann vorsehen, dass an einem oder mehreren Abdeckelementträgern jeweils mehrere Gleit- oder Abrollelemente derart hintereinander angeordnet sind, dass sie im Verlauf der vertikalen Aufwärtsbewegung des Ladekontaktelementträgerkopfes gleichzeitig oder nacheinander an einer an dem Ladekontaktelementträgerkopf angeordneten Einlaufschräge abrollen oder gleiten.

Es kann außerdem vorgesehen sein, dass die Abdeckelemente mit den Abdeckelementträgern jeweils derart elastisch beweglich verbunden sind, dass die Abdeckelemente beim Überfahren durch das Gewicht eines Kraftfahrzeugs in vertikaler Richtung nach unten in den Anschlussrahmen pressbar sind, wobei der Anschlussrahmen einen Anschlag zur Begrenzung der Bewegung der Abdeckelemente in vertikaler Richtung bildet. Durch diese Ausgestaltung werden beim Überfahren der Fahrbahnabdeckung die wesentlichen Kräfte nach einer anfänglich gemeinsamen vertikalen Bewegung von Abdeckelementen und Abdeckelementträgern durch den mechanischen Anschlag getragen, an den sich die Abdeckelemente innerhalb des Anschlussrahmens anlegen.

Vorteile der verschiedenen Ausführungsformen der Erfindung liegen unter anderem darin, dass
- für Kontaktschluss und Aktivierung der Fahrbahnabdeckung nur eine einzelne Aktorik benötigt wird,
- Kontaktschluss und Ausgleich der Positionierungstoleranzen durch eine rein vertikale Bewegung der Aktorik erreicht wird,
- die Positionstoleranzen durch eine formschlüssige Verbindung zwischen Kontaktvorrichtung und der in einer Raumrichtung reversibel verschieblichen und/oder um eine Drehachse um einen großen Winkel (bis nahe 90 Grad) reversibel verdrehbaren Ladekontakteinheitsseite sowie einer Hubmechanik, welche eine kombinierte Quer- und Längsbeweglichkeit in eine orthogonal zur ersten Raumrichtung (Kontaktierungsrichtung) stehende zweite Raumrichtung reversible Beweglichkeit aufweist, ausgeglichen werden,
- die notwendige Halte- und Kontaktkraft während des Ladevorgangs durch Aktivierung eines Elektromagneten (Kraftschluss) aufgebracht wird, wodurch die Aktorik stromlos geschaltet werden kann und das System maximale Bewegungsfreiheit in Wirkrichtung der Gravitation aufweist; die Bestromung der Aktorik wird dabei nach Auswertung einer Stromüberhöhung im Moment des erfolgten Kontaktschlusses abgeschaltet,
- zu- und abschaltbare Verriegelung des Kontaktschlusses während des Ladevorgangs (elektromagnetische Wirkung) ermöglicht ist,
- die polrichtige Anfahrt des zu ladenden Fahrzeuges aus zwei Bewegungsrichtungen einer ersten Raumrichtung ermöglicht ist,
- eine Anfahrt aus einer orthogonal zur ersten Raumrichtung stehenden zweiten Raumrichtung durch entsprechende Anordnung der Kontaktelemente und Ladekontaktelemente zur Ausbildung der Schutzleiter-Verbindung (PE) nicht zu einer Sollstromfreigabe führen kann (Verhinderung eines Kurzschlusses bei nicht polrichtiger Anfahrt),
- die miteinander im Kontaktschluss stehenden Kontaktelemente und Ladekontaktelemente im Sinne geltender Vorschriften zur Elektrosicherheit (ECE R100) gegen direktes Berühren (Prüffinger) geschützt sind, ohne das ein zusätzliches Barriereelement benötigt wird,
- zur Rückführung des Systems in die Ausgangslage (sicherer Anlagenzustand) keine Antriebsenergie benötigt wird (Bestromung Elektromagnet wird abgebrochen, Rückführung durch Gravitation),
- die Ladekontakteinheit bei Rückfall in den sicheren Anlagenzustand selbsttätig in deren Ausgangslage zurück geführt wird (Zentrierung über Klappenmechanik),
- die Kontaktvorrichtung einen Schutz gegen Umwelteinwirkungen, insbesondere Schmutz, in Form beispielsweise eines Klappensystems aufweisen kann, welches mit oder ohne separate Funktionsaktorik (elektrisch, pneumatisch, hydraulisch, magnetisch, Schwerkraft und Federkraft) ausgeführt sein kann,
- die durch Gravitation beschleunigte Systemmasse bei Rückfall in den sicheren Anlagenzustand durch einen hydraulischen oder nach einem alternativen Wirkprinzip arbeitenden Stoßdämpfer gedämpft wird,
- durch beispielsweise einen in der Fahrbahnabdeckung integrierten Elektromagneten die Klappenmechanik gegen unberechtigtes Öffnen gesichert werden kann,
- die Fahrbahnabdeckung oder die Kontaktvorrichtung einen Sensor enthalten kann, mit dessen Hilfe die Berechtigung und/oder die korrekte Position des nachzuladenden Fahrzeuges hinsichtlich der Einhaltung der tolerierbaren Positionierungsgenauigkeit geprüft werden kann,
- im Schachtelement eine Vorrichtung, beispielsweise eine Warmluftheizung, vorgesehen ist, um für die Schachtabdeckung und die Ladekontakteinheit Schnee- und Eisfreiheit zu gewährleisten,
- an der Kontaktvorrichtung Heizelemente, beispielsweise in Form von Heizbändern, vorgesehen werden können, um für die Kontaktelemente Schnee- und Eisfreiheit zu gewährleisten, und
- zur Erhöhung des übertragbaren Ladestroms mehr als ein Kontaktelement je ausgebildetem Kontaktpol, vornehmlich der Kontaktpole zur Leistungsübertragung und für den Schutzleiter (PE), sowohl in der Kontaktvorrichtung als auch in der Ladekontakteinheit enthalten sein können.

Die Erfindung bezieht sich letztlich auch auf eine Ladekontakteinrichtung mit einer Ladekontakteinheit der oben beschriebenen Art und mit einer Fahrbahnabdeckung der oben beschriebenen Art, wobei der vertikal antreibbare Ladekontaktelementträgerkopf und die Fahrbahnabdeckung derart eingerichtet sind, dass der Ladekontaktelementträgerkopf bei seiner vertikalen Aufwärtsbewegung ein oder mehrere Abdeckelemente der Fahrbahnabdeckung aus ihrer Verschlussposition auslenkt. Dabei kann der Ladekontaktelementträgerkopf in einer Implementierung unmittelbar auf Abdeckelemente eine Kraft ausüben, um diese zu bewegen. Dies kann auch über Hebel oder andere Getriebeelemente geschehen. Mittels der Bewegung des Ladekontaktelementträgerkopfes kann auch ein separater Antrieb von Abdeckelementen mechanisch oder elektrisch ausgelöst werden. Hierzu kann beispielsweise auch eine mechanische Verriegelung der Abdeckelemente durch den Ladekontaktelementträgerkopf gelöst oder ein elektrischer Schalter betätigt werden.

Der Ladekontaktelementträgerkopf kann eine oder mehrere Führungsflächen, insbesondere Abschrägungen oder Schrägen, aufweisen, die auf eine Wirkfläche der Fahrbahnabdeckung, insbesondere der Abdeckelemente, wirken, um die Abdeckelemente aufzustoßen, und die zudem als Führungflächen für die Ausrichtung relativ zu einer Kontaktvorrichtung an einem Fahrzeug eingerichtet sind.

Im Folgenden wird die Erfindung anhand von Figuren einer Zeichnung gezeigt und anschließend erläutert. Dabei zeigt
- Fig. 1: schematisch ein Fahrzeug, das sich oberhalb einer Lade-kontakteinheit befindet,
- Fig. 2: eine Ladekontakteinheit mit einer Fahrbahnabdeckung und einer fahrzeugseitigen Kontaktvorrichtung,
- Fign. 3-10: Teile der Ladekontakteinheit in verschiedenen Ansichten und Querschnitten,
- Fign. 11-13: die Kontaktvorrichtung in verschiedenen Ansichten,
- Fign. 14 und 15: Teile der Fahrbahnabdeckung in einer isometrischen Ansicht,
- Fign. 16 und 17: Teile der Fahrbahnabdeckung in einer Seitenansicht,
- Fign. 18-21: in einer Seitenansicht die Fahrbahnabdeckung sowie die Hubvorrichtung, das Ladekontaktelementträgerpodest und den Ladekontaktelementträgerkopf bei der Bewegung durch die Fahrbahnabdeckung hindurch,
- Fig. 22: eine perspektivische Darstellung einer Ladekontakteinrichtung, einer Fahrbahnabdeckung und einer Kontaktvorrichtung,
- Fig. 23: eine perspektivische Darstellung einer Fahrbahnabdeckung,
- Fig. 24: einen Ladekontaktelementträger in zwei verschiedenen Vertikalpositionen,
- Fign. 25 a und b: einen Ladekontaktelementträger mit einem Ladekontaktelementträgerkopf, der gegenüber einem Podest einmal verschoben und (in Fig. 25b) verdreht ist,
- Fign. 26 und 27: ein Ladekontaktelementträgerpodest mit und ohne verkleidung,
- Fign. 28 bis 31: ein in zwei Richtungen verschiebbares Zwischenpodest für einen Ladekontaktelementträgerkopf,
- Fig. 32: eine Fahrbahnabdeckung und ein Schachtelement in einer Seitenansicht und
- Fign. 33 bis 35: einen Ladekontaktelementträger in drei verschiedenen Vertikalpositionen, in denen die Abdeckelemente und Abdeckelementträger verschieden weit ausgelenkt sind.

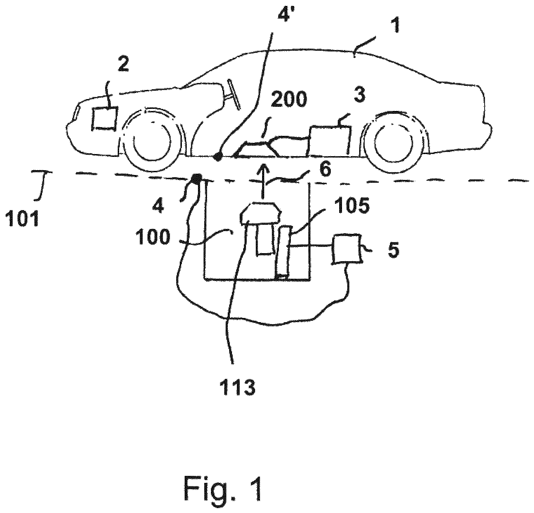

Figur 1 zeigt beispielhaft ein Fahrzeug 1 in schematischer Seitenansicht, das oberhalb einer Ladekontakteinheit 100 angeordnet ist. Diese ist in einem Schacht unterhalb der Fahrbahnebene 101 angeordnet. Die Ladekontakteinheit 100 weist einen Ladekontaktelementträgerkopf 113 auf, der im Folgenden noch näher erläutert wird und der in der durch den Pfeil 6 dargestellten Kontaktierungsrichtung durch eine Hubmechanik 105 antreibbar ist. Die Hubmechanik 105 wird dabei durch eine Steuereinrichtung 5 angesteuert, die ein Freigabesignal von einer Sensorvorrichtung 4, 4' verarbeitet, die entweder ladekontakteinheitsseitig (4) oder kontaktvorrichtungsseitig (4') vorgesehen ist und die eine Positionierung des Fahrzeugs 1 innerhalb eines Referenzpositionsbereichs relativ zur Ladekontakteinheit 100 erfasst.

Wird der Ladekontaktelementträgerkopf 113 nun in Richtung des Pfeils 6 zur Kontaktvorrichtung 200 bis zur Kontaktgabe bewegt, so wird ein elektrischer Kontakt hergestellt, der dazu führt, dass ein elektrischer Ladestrom von einem Versorgungsnetz über die Ladekontaktelemente zur Kontaktvorrichtung 200 und zu einem elektrischen Energiespeicher 3 im Fahrzeug 1 fließt. Damit kann die Energiespeichereinrichtung 3 aufgeladen werden, die innerhalb des Fahrzeugs 1 beispielsweise einen Elektromotor 2 oder andere elektrische Systeme mit Energie versorgt.

Die Erfindung betrifft unter anderem, wie in den Figuren gezeigt, ein System, welches durch einen einzigen, geeigneten Antrieb eine vertikale Aufwärtsbewegung einer im Boden integrierten Ladekontakteinheit ermöglicht und durch Aufstoßen die Öffnung einer von Fahrzeugen überfahrbaren, darüber befindlichen, beweglichen Fahrbahnabdeckung hervorruft, welche den im Boden integrierten, verschiebbaren Ladekontaktelementträger in einer Mittellage zentriert und den Bereich zwischen Fahrbahn und Fahrzeugunterboden während ihrer Bewegung geringstmöglich einschränkt und damit eine konduktive Verbindung zur elektrischen Energieübertragung mit einer fahrzeugseitigen Kontaktvorrichtung herstellt.

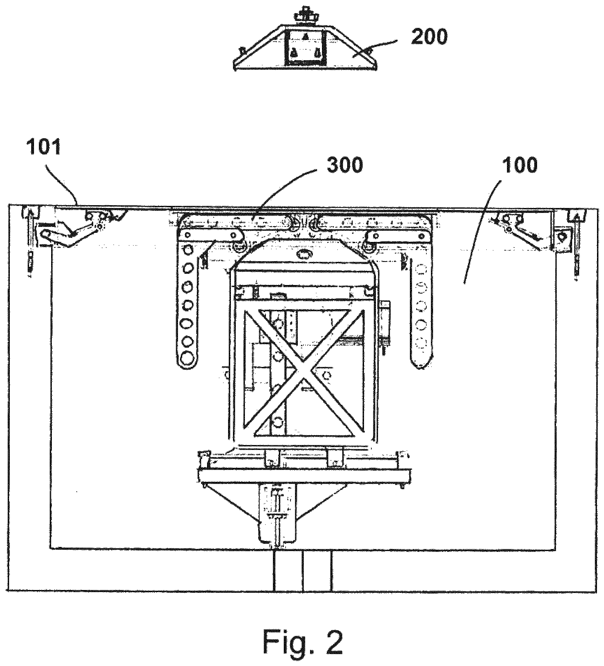

Das Unterflur-Kontaktsystem aus Figur 2 besteht aus drei Teilsystemen. Diese sind die Ladekontakteinheit 100, Kontaktvorrichtung 200 und die Fahrbahnabdeckung 300. Unter Bezugnahme auf die beigefügten Figuren wird zunächst eine erste bevorzugte Ausführungsform des Unterflur-Kontaktsystems erläutert.

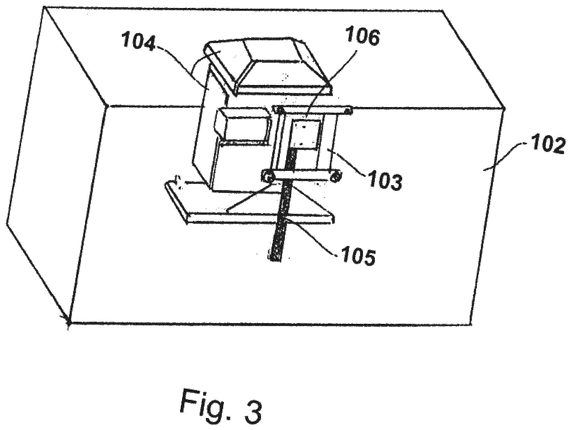

Figur 3 zeigt die Ladekontakteinheit in einer Ansicht unterhalb der Fahrbahnoberfläche 101 als einen in den Boden integrierten Mechanismus. Dieser besteht aus einem Schachtelement 102, einem am Schachtelement 102 befestigten Trägerelement 103, einem Ladekontaktelementträger 104 und einer Hubmechanik 105, welche das Trägerelement 103 und den Ladekontaktelementträger 104 verbindet und eine vertikale Relativbewegung des Ladekontaktelementträgers 104 zum Trägerelement 103 ermöglicht.

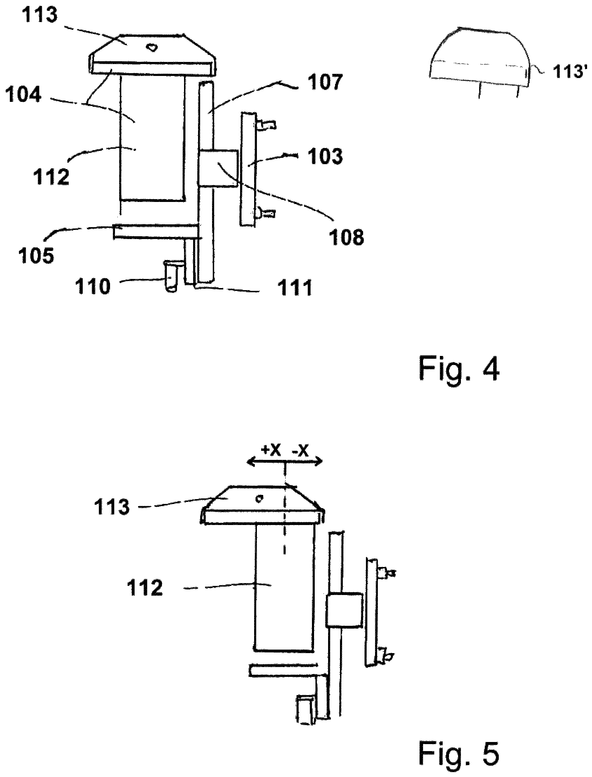

Figur 4 zeigt die Hubmechanik, bestehend aus Trägerelement 103, Hubgestell 105, Zahnstangenhubgetriebe 106 mit Zahnstange 107 und Schrittmotor 108. Aufgabe der Hubmechanik ist das Anheben des Ladekontaktelementträgers 104 zum Aufstoßen der Fahrbahnabdeckung 300 und Überwinden des Luftspalts zwischen Ladekontaktelementträger 104 und Kontaktvorrichtung 200. Im unteren Bereich des Systems befindet sich ein hydraulischer Stoßdämpfer 110 und ein elastisches Dämpfungselement 111.

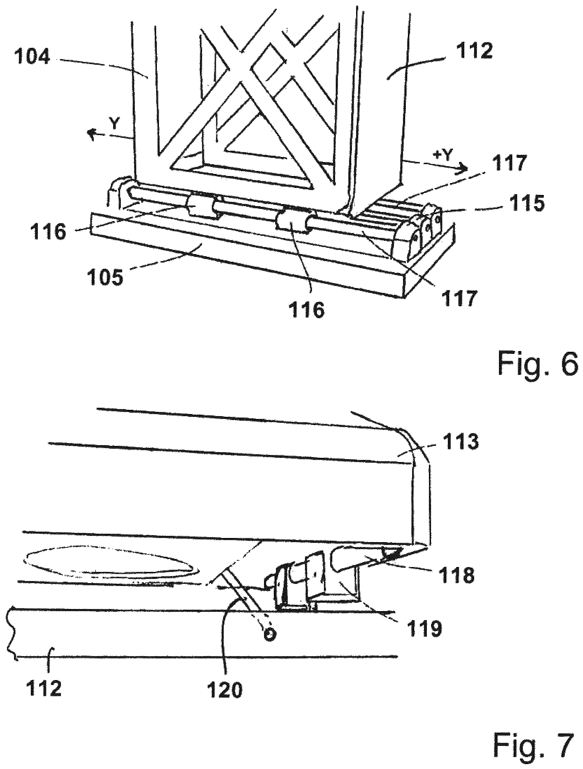

Eine Zusammenschau der Figuren 4 bis 10 zeigt den Ladekontaktelementträger 104 in verschiedenen Ansichten. Der Ladekontaktelementträger 104 ist zweiteilig aufgebaut und besteht überwiegend aus einem nicht elektrisch leitfähigen Material. Er setzt sich zusammen aus dem Ladekontaktelementträgerpodest 112 und dem Ladekontaktelementträgerkopf 113. Der Ladekontaktelementträgerkopf 113 hat die Form eines Pyramidenstumpfes und trägt die Ladekontaktelemente 121. Der Ladekontaktelementträgerkopf 113 ist in Fahrzeuglängsrichtung horizontal zwischen zwei Endanschlägen 114 um eine Mittellage linear beweglich (± x). Durch diese Beweglichkeit können Positionierungstoleranzen des Fahrzeugs in Fahrtrichtung ausgeglichen werden.

Der Ladekontaktelementträgerkopf kann im Bereich seiner schrägen Flächen auch konvex ausgebildet sein, wie die Variante, die in Figur 4 mit 113' bezeichnet ist. Dadurch können auch Schrägstellungen des Ladekontaktelementträgers in Form von Abweichungen von der Vertikalrichtung gegenüber der Kontaktvorrichtung ausgeglichen werden.

Der Ladekontaktelementträger 104 ist zudem in Fahrzeugquerrichtung linear horizontal auf dem Hubgestell 105 zwischen zwei begrenzenden Dämpfungselementen 115 um eine Mittellage beweglich (± y). Durch diese Beweglichkeit können Positionierungstoleranzen des Fahrzeugs quer zur Fahrtrichtung ausgeglichen werden. Die Lagerung des Ladekontaktelementträgerpodests 112 auf dem Hubgestell 105 ist so ausgeführt, dass das Ladekontaktelementträgerpodest 112 über geeignete Linearführungselemente 116 auf kompatiblen Linearführungsschienen 117, welche auf dem Hubgestell 105 befestigt sind, geführt ist. Die Ausrichtung des gesamten Ladekontaktelementträgers 104 in einer mittleren Position erfolgt über einen Federmechanismus 316 in der Fahrbahnabdeckung 300.

Der Ladekontaktelementträgerkopf 113 ist auf dem Ladekontaktelementträgerpodest 112 so gelagert, dass der Ladekontaktelementträgerkopf 113 mit Linearführungsschienen 118 ausgerüstet ist, welche kompatible, am Ladekontaktelementträgerpodest 112 befestigte Linearführungselemente 119 führen. Die Ausrichtung des Ladekontaktelementträgerkopfes 113 auf dem Ladekontaktelementträgerpodest 112 in einer mittleren Position erfolgt durch elastische Elemente 120, insbesondere aus einem nicht elektrisch leitfähigen Material.

Die elastischen Elemente 120 sind an den Punkten P mit dem Ladekontaktelementträgerpodest 112 und an den Punkten K mit dem Ladekontaktelementträgerkopf 113 verbunden. Durch eine rotationssymmetrische Anordnung der elastischen Elemente 120 werden ein Kräftegleichgewicht und damit die mittige Positionierung sichergestellt. Gegen das Berühren der Ladekontaktelemente 121 im kontaktierten Zustand ist unter dem Ladekontaktelementträgerkopf 113 ein Berührschutz 122 vorgesehen.

Der Ladekontaktelementträgerkopf 113 trägt die wegseitigen Ladekontaktelemente 121 für Plus- 123 und Minuspol 124, den PE-Kontakt (PE) 125 und den Control Pilot-Kontakt (CP) 126. Das Ladekontaktelement für CP 126 besteht aus einem magnetischen Material. Die Ladekontaktelemente für PE 125 sind so angeordnet, dass die möglichen Kontaktierungspositionen beschränkt sind. Es ist möglich, eine Kontaktierung aus einer Fahrtrichtung X und der um 180° dazu gedrehten, entgegengesetzten Richtung vorzunehmen. Eine Freigabe der Leistungskontakte bei einer Positionierung orthogonal zur Fahrrichtung X ist nicht möglich, da der PE 125 in diesem Fall zu keiner Zeit kontaktiert werden kann. So ist sichergestellt, dass sich nur zugehörige Ladekontaktelemente für Plus-123 und Minuspol 124 und Kontaktelemente für Plus- 201 und Minuspol 202 für den Ladeprozess berühren können.

Zur Einhaltung einer definierten Kontaktreihenfolge beim Kontaktschluss und bei der Kontakttrennung sind die Ladekontaktelemente für Plus- 123 und Minuspol 124 und für PE 125 als Federkontaktelemente mit unterschiedlicher Ausgangshöhe ausgeführt. Die Ladekontaktelemente für PE 125 haben eine Ausgangshöhe H1. Die Ladekontaktelemente für Plus- 123 und Minuspol 124 haben eine Ausgangshöhe H2. Das Ladekontaktelement für CP 126 hat eine Ausgangshöhe H3. Es ist starr ausgeführt und dient als Endanschlag für die Kontaktierung. Die Ausgangshöhen verhalten sich zueinander nach folgender Beziehung: H1>H2>H3. Die Ladekontakte für PE 125 sind so angeordnet, dass sie beim Hineingleiten in die Kontaktvorrichtung 200 zu keinem Zeitpunkt die Kontaktelemente für Plus 123 oder Minuspol 124 berühren können.

Durch die genannte Beweglichkeit kann der Ladekontaktelementträgerkopf 113 an der Gleitkante 127 frei in die Kontaktvorrichtung 200 hinein gleiten. Die Ladekontaktelemente 123, 124, 125, 126 sind durch Versteifungen 128 im Ladekontaktelementträgerkopf 113 räumlich voneinander getrennt. So ist sichergestellt, dass eine Verschmutzung durch Wasser oder Salzlauge keine elektrisch leitfähige Verbindung zwischen den Ladekontaktelementen 123, 124, 125, 126 bilden kann.

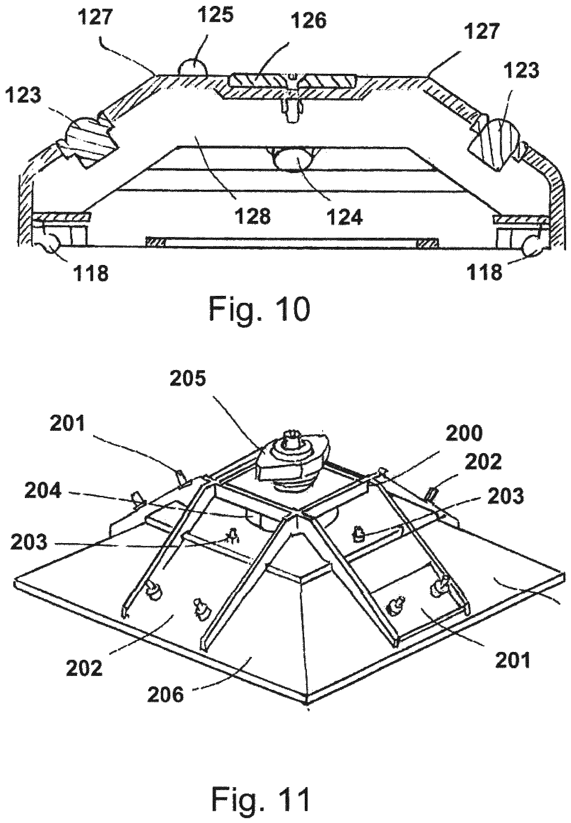

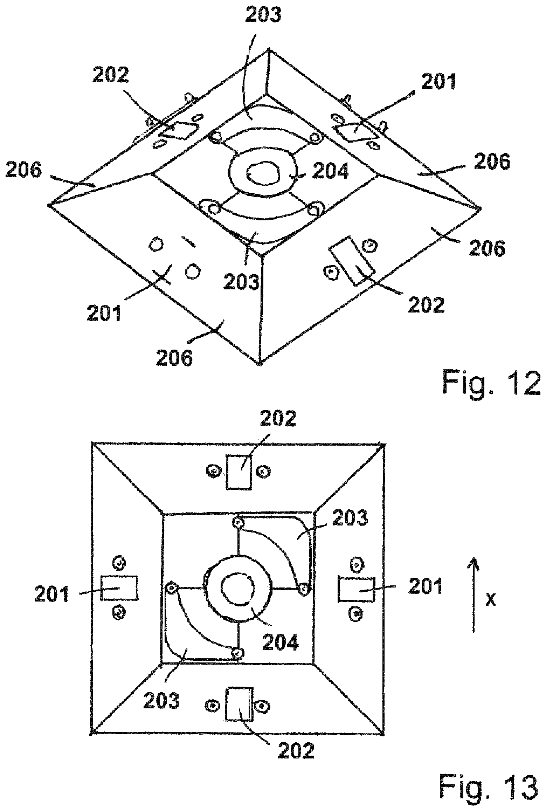

Die Figuren 11 bis 13 zeigen die Kontaktvorrichtung in verschiedenen Ansichten. Die Kontaktvorrichtung 200 bezeichnet das am Fahrzeugunterboden starr (Erfindungsgedanke) oder beweglich befestigte Teilsystem. Die Kontaktvorrichtung trägt die fahrzeugseitigen Kontaktelemente für Pluspol 201 und Minuspol 202, den PE 203 und den CP 204. Die Kontaktelemente für Pluspol 201 und Minuspol 202 und für den PE 203 sind an der Kontaktvorrichtung 200 befestigte, starre Platten aus elektrisch leitfähigem Material. Das Kontaktelement für CP 204 (Signal-/Sicherheits-/Steuerkontakt) ist ein Elektromagnet. Dieser ist in der Kontaktvorrichtung 200 so positioniert, dass er im kontaktierten Zustand deckungsgleich/komplementär zum im Ladekontaktelementträgerkopf 113 integrierten magnetischen Gegenstück ist. Die Kontaktvorrichtung 200 ist so am Fahrzeug positioniert, dass ihr tiefster Punkt bei maximal zulässigem Fahrzeuggewicht den normativen Mindestabstand zur Fahrbahnoberfläche aufweist. Die Kontaktvorrichtung 200 ist um ihre Hochachse drehbar, elastisch gelagert, so dass sie im kraftfreien Zustand selbsttätig ihre Ausgangsposition einnimmt. Dazu ist die Befestigungsstelle zum Fahrzeug als kugelgelenkartig drehbares, elastisches Lager 205 ausgeführt. Durch die drehbar, elastische Lagerung können Positionstoleranzen des Fahrzeugs hinsichtlich der Drehung um die Fahrzeughochachse ausgeglichen werden.

Die Kontaktvorrichtung 200 hat die Form eines invertierten Pyramidenstumpfes und ist kongruent zum Ladekontaktelementträgerkopf 113. Durch die Form des invertierten Pyramidenstumpfes kann der Ladekontaktelementträgerkopf 113 mit der Gleitkante 127 an den Kontaktführungsflächen 206 der Kontaktvorrichtung in die Kontaktvorrichtung hineingleiten.

Die Ladekontaktelemente für PE 125 und die Kontaktelemente für PE 203 können sich nur berühren, wenn der Ladekontaktelementträgerkopf 113 so ausgerichtet ist, dass eine Kontaktierung aus einer Fahrtrichtung X und der 180° dazu gedrehten, entgegengesetzten Richtung vorgenommen wird. In dem Fall, dass der Ladekontaktelementträgerkopf 90 zur Kontaktvorrichtung ausgerichtet ist, können sich die Ladekontaktelemente für PE 125 und die Kontaktelemente für PE 203 nicht berühren. Eine erfolgreiche Kontaktierung im Sinne der normativen Vorgaben zur Nachladung batterieelektrischer Fahrzeuge ist somit nicht möglich und eine Stromübertragung in diesem Fall ausgeschlossen.

Der als Kontaktelement CP 204 vorgesehene Elektromagnet wird erst im Zuge der Initialisierung des Ladevorgangs, also bei Fahrzeugstillstand, aktiviert. Dabei ist die magnetische Verbindung zwischen dem Kontaktelement CP 204 und dem Ladekontaktelement CP 126 so ausgelegt, dass die zur Hochstromübertragung notwendige Kontaktkraft an allen Verbindungen zwischen den Ladekontaktelementen und den Kontaktelementen zur Verfügung steht. So ist es möglich, den Schrittmotor 108 nach erfolgreicher Kontaktierung zu deaktivieren. Die magnetische Verbindung funktioniert während des Ladevorgangs zusätzlich zur Ausbildung einer benötigten Kontaktkraft ebenfalls als Verriegelung der Verbindung zwischen Kontaktvorrichtung und Ladekontaktvorrichtung. Bei Auftreten einer Störung oder im Falle einer kontrollierten Beendigung des Ladevorgangs kann die magnetische Verbindung zwischen dem Kontaktelement CP 204 und dem Ladekontaktelement CP 126 durch Deaktivierung des Elektromagnets (Abschaltung von dessen Spannungsversorgung) beendet werden. Das System fällt dann, der gravitativen Wirkrichtung folgend, selbstständig in seine Ausgangsposition unterhalb der Fahrbahnoberkante. Dabei wird die beschleunigte Masse durch einen hydraulischen Stoßdämpfer 110 und ein elastisches Dämpfungselement 111 gebremst.

Durch die Positionierung der Ladekontaktelemente für PE 125 am Ladekontaktelementträgerkopf 113 und die Positionierung der Kontaktelemente für Pluspol 201 und Minuspol 202 an der Kontaktvorrichtung 200 und am Ladekontaktelementträgerkopf 113 bilden Kontaktvorrichtung 200 und Ladekontakteinheit 100 ein System, welches in seinen Eigenschaften folgende Ähnlichkeiten zu einem Stecker-Buchse-System aufweist:
- Stromübertragung nur in zulässigen Relativpositionen möglich;
- Verriegelung des Systems während der Stromübertragung;
- Kongruenz der Teilsysteme;
- Schutz vor Berührung (mindestens Einhaltung der Vorgabe "Prüffinger" der ECE R100), ohne dass ein zusätzliches Barriereelement benötigt wird.

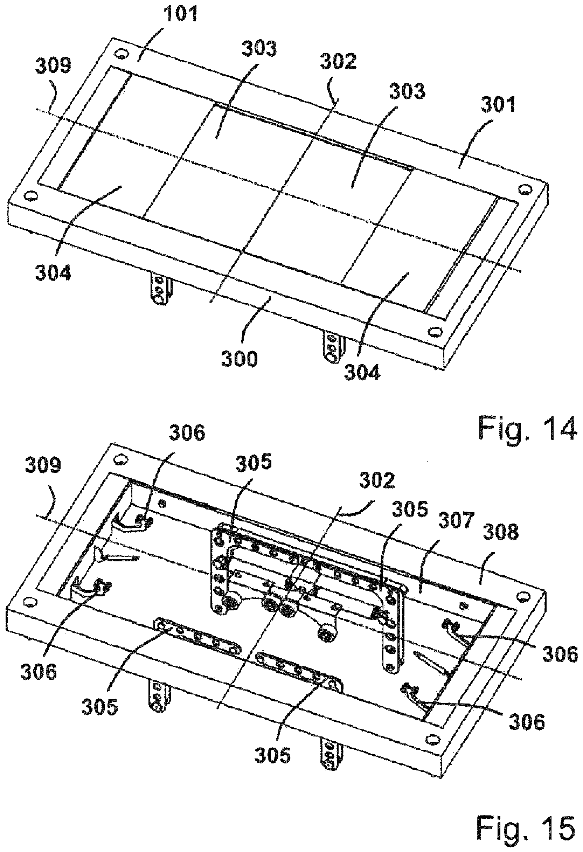

Eine Zusammenschau der Figuren 14 bis 15 zeigt die Fahrbahnabdeckung 300 in einer perspektivischen Ansicht und als einen in die Fahrbahnoberfläche 101 integrierten Mechanismus. Dieser umfasst einen Anschlussrahmen 301, welcher fest mit dem Schachtelement 102 der Ladekontakteinheit 100 verbunden ist und vier symmetrisch um eine Längsachse 302 angeordnete, bewegliche Klappen trägt.

Diese beweglichen Klappen werden als Hauptklappen 303 und Hilfsklappen 304 bezeichnet, wobei die Hauptklappen 303 über eine Hebelkonstruktion 305 und die Hilfsklappen 304 über eine Scharnierkonstruktion 306 drehbar mit dem Anschlussrahmen 301 verbunden sind. Der innenliegende Teil des Anschlussrahmens 301 ist als Stahlrahmen 307 ausgebildet und wird von einem außenliegenden Betonrahmen 308 umschlossen. Dabei ist der Stahlrahmen 307 formschlüssig über einen Falz im Schachtelement 102 der Ladekontakteinheit 100 eingelassen, um eine Verschiebung entlang der Längsachse 302 und der Querachse 309 zu verhindern.

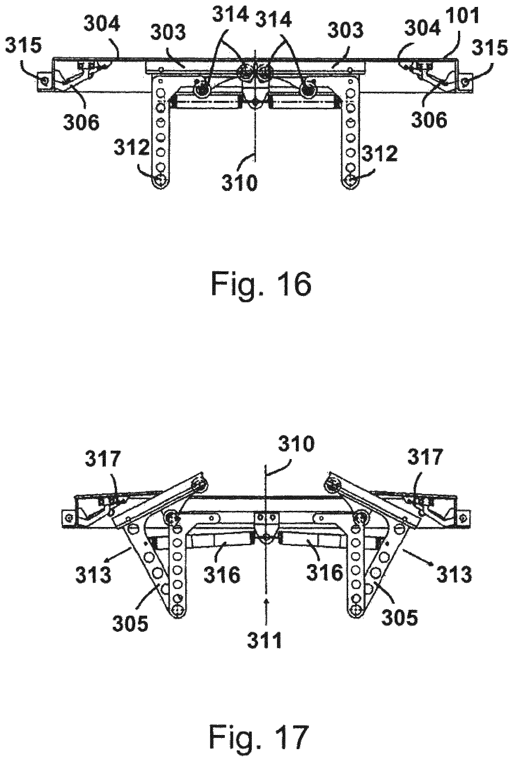

Eine Zusammenschau der Figuren 16 bis 17 zeigt die Fahrbahnabdeckung 300 in einer Vorderansicht im geschlossenen und geöffneten Zustand, wobei zur Öffnung die vertikale Bewegung des Ladekontaktelementträgers 104 entlang der Hochachse 310, hier durch Pfeil 311 angedeutet, ausgenutzt wird, um die Hauptklappen 303 um ein Drehlager 312 gegenläufig aus ihrer Ruhelage zu rotieren, wie durch Pfeil 313 angedeutet. Dabei sorgen die an beiden Hauptklappen 303 befestigten Roll- oder Gleitelemente 314 dafür, dass der Ladekontaktelementträger 104 reibungsarm an den Hauptklappen 303 entlang rollen beziehungsweise gleiten kann und dadurch die Hebelkonstruktion 305 beide Hauptklappen 303 symmetrisch in zueinander gegenläufiger Richtung öffnen kann. Eingeleitet durch den Öffnungs- respektive Schließvorgang gleiten die Hilfsklappen 304 entlang der Hauptklappen 303 und werden mit Hilfe der Scharnierkonstruktion 306 um ein Drehlager 315 rotiert. In Ruhelage soll die Fahrbahnabdeckung 300 eine geschlossene Fahrbahnoberfläche 101 ausbilden; hierfür sind die Hauptklappen 303 sowie die Hilfsklappen 304 durch die Federelemente 316 und die Federelemente 317 vorgespannt.

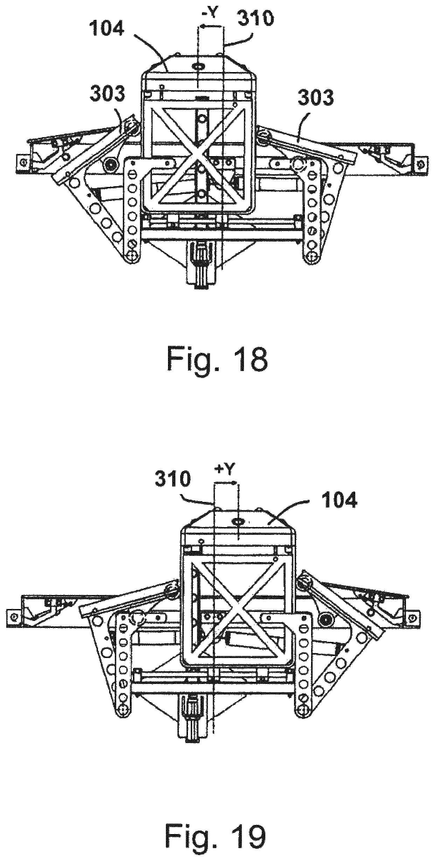

Eine Zusammenschau der Figuren 18 bis 19 zeigt, wie die Fahrbahnabdeckung 300 die Abweichung (± y) der Position des Ladekontaktelementträgers 104 von der Hochachse 310 ausgleicht, indem der Ladekontaktelementträger 104 die federvorgespannten Hauptklappen 303 während der eindimensionalen horizontalen Bewegung, hervorgerufen durch eine Positionsabweichung des Fahrzeuges in Fahrzeugquerrichtung Y nach Erstberührung des Ladekontaktelementträgers 104 mit der Kontaktvorrichtung 200, führt. Der Ladekontaktelementträger wird durch die Positionsabweichung des Fahrzeuges bei der Kontaktierung aus seiner Mittellage bewegt (in beiden Richtungen von Y), die Klappenmechanik sorgt dafür, dass dieser nach Kontakttrennung und Rückfall in die Ruheposition wieder in die Mittellage geführt wird.

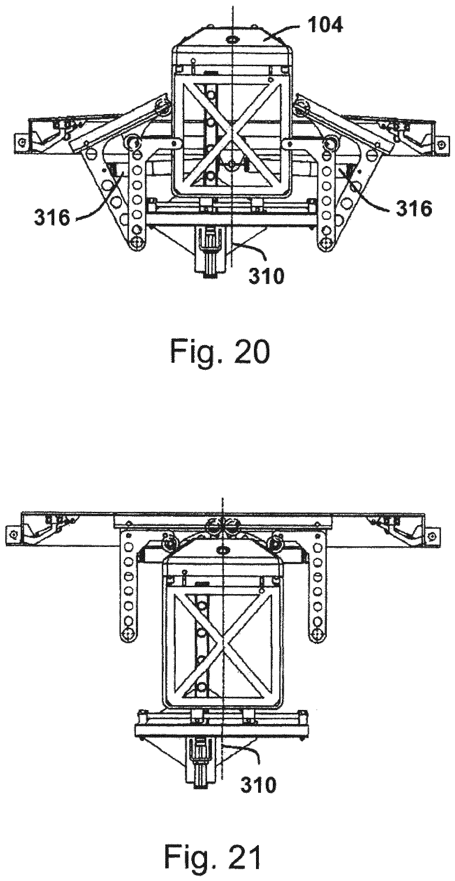

Eine Zusammenschau der Figuren 20 bis 21 zeigt, dass der Ladekontaktelementträger 104 durch die Rückstellkräfte der Federelemente 316 aus einer horizontal verschobenen Position, wie in den vorangegangenen Figuren 18 und 19 gezeigt, wieder in seine zentrierte Position verschoben wird, damit dieser nach dem Schließvorgang der Fahrbahnabdeckung 300 stets eine zur Hochachse 310 symmetrische Position einnimmt.

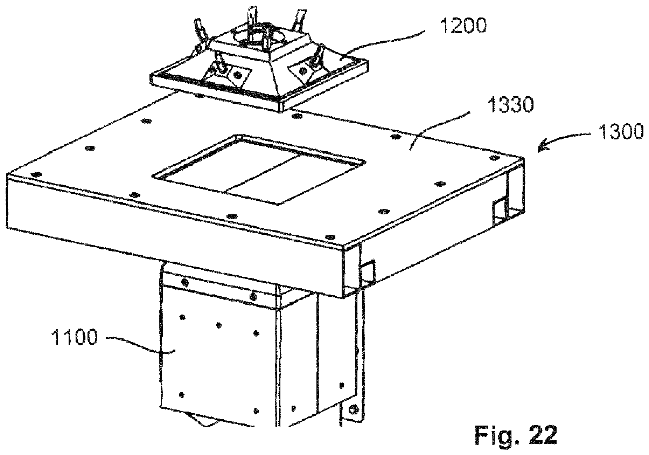

Die Erfindung betrifft zudem eine weitere, in den Figuren 22 bis 35 gezeigte Ausführungsform der Erfindung, bei der ebenfalls durch einen einzigen, geeigneten Antrieb bei einer im Boden integrierten Ladekontakteinheit eine vertikale Aufwärtsbewegung eines Ladekontaktelementträgers ermöglicht und die Öffnung einer von Fahrzeugen überfahrbaren, darüber befindlichen, beweglichen Fahrbahnabdeckung bewirkt werden kann.

Das Unterflur-Kontaktsystem aus den Figuren 22 bis 35 umfasst ebenso wie das System der Figuren 1 bis 21 die drei Teilsysteme, die aus einer Ladekontakteinheit 1100, Kontaktvorrichtung 1200 und die Fahrbahnabdeckung 1300. bestehen

Die Fahrbahnabdeckung 1300 ist in der Figur 22 in einer perspektivischen Ansicht gezeigt und als ein in die Fahrbahnoberfläche integrierter Mechanismus ausgebildet. Dieser umfasst, wie bei den in den Figuren 1 bis 21 gezeigten Ausführungsformen, einen Anschlussrahmen 1307, welcher fest mit dem Schachtelement der Ladekontakteinheit 1100 verbunden ist sowie Abdeckelemente 1303, 1304 und Abdeckelementträger 1303a, 1304a, auf die weiter unten näher eingegangen wird.

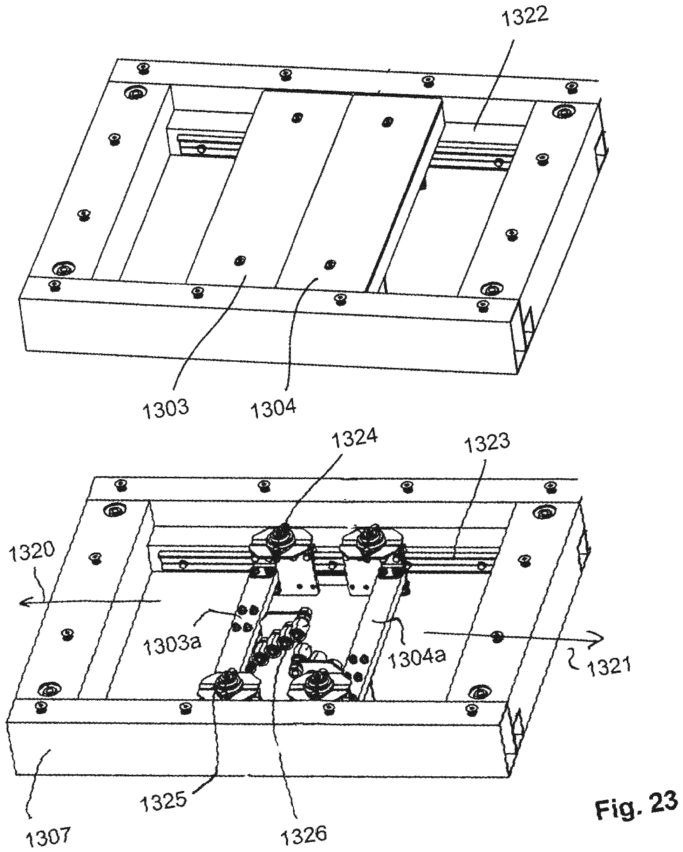

Figur 23 zeigt in ihrem oberen Bereich in einer perspektivischen Darstellung die Fahrbahnabdeckung mit dem Anschlussrahmen1307 und zwei Abdeckelementen in Form von in dem Anschlussrahmen linear verschiebbaren Platten 1303, 1304. Die Abdeckelemente/Platten sind derart mechanisch geführt, dass sie horizontal in dem Anschlussrahmen 1307 in Richtung der Pfeile 1320, 1321 auseinandergleiten können. Sie gleiten dabei oberhalb und im Abstand von einem oder mehreren in dem Anschlussrahmen angeordneten, ebenen mechanischen Anschlägen 1322. Wird die Fahrbahnabdeckung im geschlossenen Zustand von einem Fahrzeug überfahren oder anderweitig von oben belastet, so senken sich die Abdeckelemente ab, bis dass sie auf dem/den Anschlägen ruhen. Das Gewicht wird auf diese Weise durch den Anschlussrahmen 1307 abgefangen und die auf die Antriebsmechanik der Abdeckelemente wirkenden Kräfte werden begrenzt.

Im unteren Bereich der Figur 23 ist der Anschlussrahmen 1307 nochmals dargestellt, wobei die Abdeckelemente 1303, 1304 weggelassen sind, um den Blick auf die Abdeckelementträger 1303a, 1304a freizugeben. Diese sind in Schienen 1323 auf beiden Seiten des Anschlussrahmens gleitend verschiebbar geführt, wodurch sich ebenfalls die horizontal gleitende Bewegbarkeit der Abdeckelemente ergibt. Die Abdeckelemente 1303 1304 sind auf den Abdeckelementträgern mittels einer schwimmenden Lagerung in Form von elastischen Halteelementen1324, 1325, beispielsweise Elastomerblöcken gelagert. Beispielsweise können die Abdeckelemente und die Abdeckelementträger unabhängig voneinander mit den Elastomerblöcken verbunden, insbesondere mittels einer Schraubverbindung verbunden sein. An den Abdeckelementträgern 1303a, 1304a sind jeweils 3 Abrollelemente achsparallel zueinander nebeneinander dargestellt, an denen ein Ladekontaktelementträgerkopf mit einer Einlaufschräge entlanggleiten kann, um den Abdeckelementträger horizontal zur Seite zu schieben. Eines der Abrollelemente ist in der Figur mit 1326 bezeichnet. Auf die Abrollelemente wird weiter unten noch näher eingegangen.

Die Ladekontakteinheit 1100 weist grundsätzlich einen Antriebsmechanismus auf, der dem in der Figur 5 dargestellten Mechanismus entspricht. Dieser besteht aus einem Schachtelement, einem am Schachtelement befestigten Trägerelement, einem Ladekontaktelementträger und einer Hubmechanik, welche das Trägerelement und den Ladekontaktelementträger 1104 verbindet und eine vertikale Bewegung des Ladekontaktelementträgers nach oben zur Fahrbahnoberfläche ermöglicht.

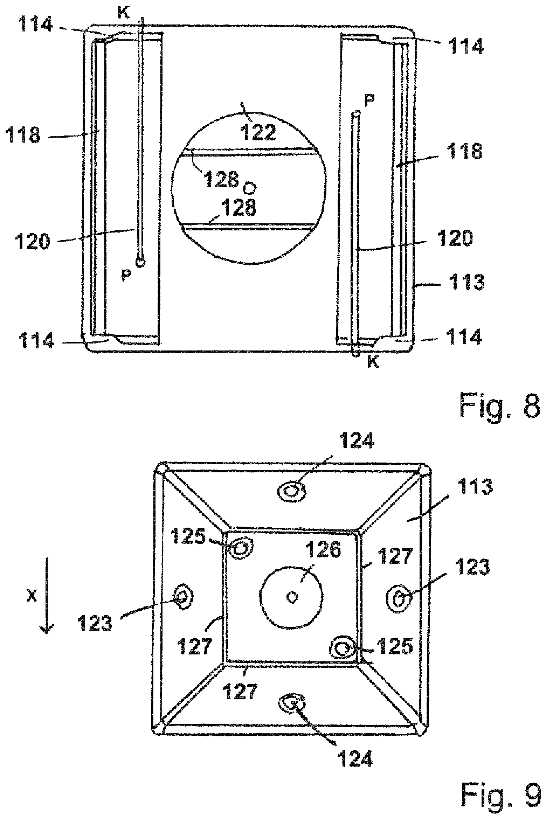

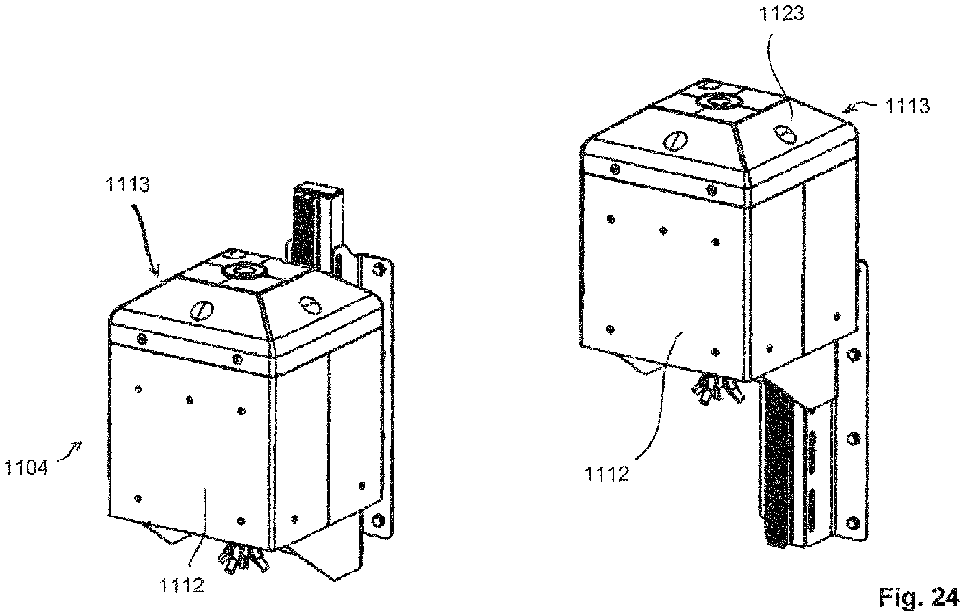

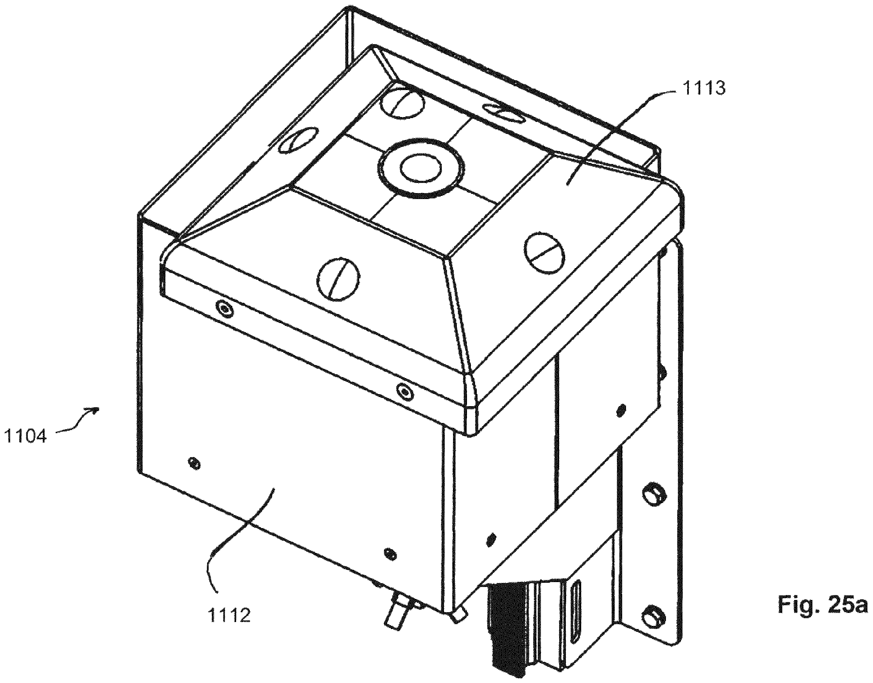

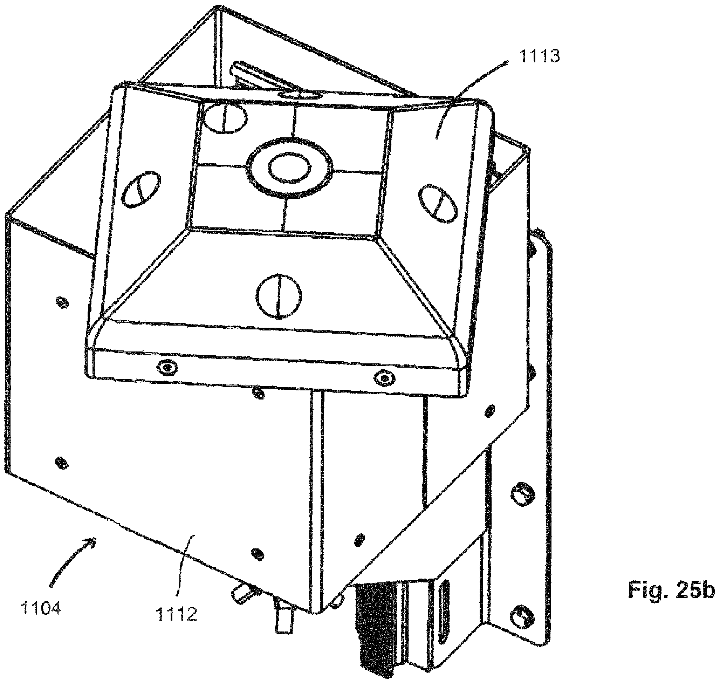

Die Figuren 24 und 25 zeigen den Ladekontaktelementträger 1104 in verschiedenen Positionen. Der Ladekontaktelementträger 1104 umfasst das Ladekontaktelementträgerpodest 1112 und den Ladekontaktelementträgerkopf 1113. Der Ladekontaktelementträgerkopf 1113 hat die Form eines Pyramidenstumpfes und trägt die Ladekontaktelemente 1123 (vgl. Figur 9, Fig. 10). Die elektrischen Kontakte des Ladekontaktelementträgerkopfes 1113 sind grundsätzlich ebenso aufgebaut und gestaltet, wie dies in den Figuren 9, 10 dargestellt ist. Die Kontaktvorrichtung 1200 kann ebenso analog zu der in den Figuren 11, 12 und 13 gezeigten aufgebaut sein. Die Kontaktvorrichtung 1200 bezeichnet grundsätzlich das am Fahrzeugunterboden starr oder beweglich befestigte Teilsystem. Durch die im Zusammenhang mit den Figuren 11, 12 und 13 beschriebenen Schutzmechanismen wird eine Freigabe des Ladestroms erst nach Sicherstellung der einwandfreien Kontaktgabe ermöglicht und es ist auch sichergestellt, dass eine Freigabe der Leistungskontakte bei einer Positionierung orthogonal zur Fahrrichtung nicht möglich ist.

Das Ladekontaktelementträgerpodest 1112 und der Ladekontaktelementträgerkopf 1113 sind, wie die Zusammenschau der linken und der rechten Darstellung dieser Elemente in der Figur 24 zeigt, gemeinsam in vertikaler Richtung durch die Hubmechanik bewegbar. Der Ladekontaktelementträgerkopf 1113 ist horizontal in zwei Dimensionen, beispielsweise in Fahrzeuglängsrichtung und quer dazu um eine Mittellage linear beweglich (± x). Die Figur 25a zeigt eine translatorisch aus der Mittellage des Ladekontaktelementträgerpodestes 1112 verschobene Position des Ladekontaktelementträgerkopfes 1113. Durch diese Beweglichkeit können Positionierungstoleranzen des Fahrzeugs in allen horizontalen Richtungen ausgeglichen werden.

Die Figur 25b zeigt eine gegenüber der Mittellage um die vertikale Achse des Ladekontaktelementträgers gedrehte Position des Ladekontaktelementträgerkopfes 1113. Durch die Drehbarkeit können auch aus einer Normalposition verdrehte Stellungen eines Fahrzeugs oder seiner Kontaktvorrichtung ausgeglichen werden und der Ladekontaktelementträgerkopf 1113 kann so verdreht und verschoben werden, dass er sich an das Kontaktelement im Fahrzeug anpassen und einen zuverlässigen Kontakt herstellen kann. Dies ist sowohl für den Fall möglich, dass das Kontaktelement für sich verschiebbar und/ oder verdrehbar gelagert ist, als auch für den Fall, dass das Kontaktelement im Fahrzeug fest und unverdrehbar und/ unverschiebbar montiert ist.

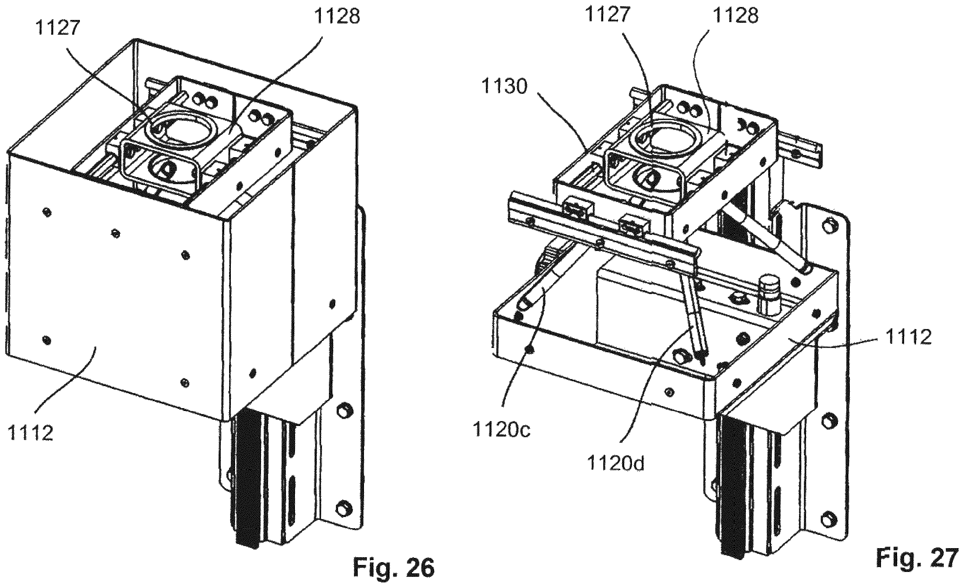

Die Figur 26 zeigt ein Ladekontaktelementträgerpodest 1112, in dem ein erstes Zwischenpodest 1128 auf Schienen linear verschiebbar gelagert ist. An dem Zwischenpodest 1128 ist ein Drehlager 1127 zur drehbaren Lagerung eines Ladekontaktelementträgerkopfes vorgesehen.

Die Figur 27 zeigt eine Darstellung eines Ladekontaktelementträgers bei der ein Teil der Verkleidung des Ladekontaktelementträgerpodestes der Übersichtlichkeit halber weggelassen ist. Es ist das erste Zwischenpodest 1127 erkennbar, dass auf Schienen gelagert ist, welche ihrerseits in einem zweiten Zwischenpodest 1130 befestigt sind.

Das zweite Zwischenpodest 1130 ist auf Schienen gelagert, die an dem Rahmen des Ladekontaktelementträgerpodestes 1112 befestigt sind. Es sind zusätzlich Federelemente gezeigt, von denen die vorderen beiden mit 1120c und 1120d bezeichnet sind und die an dem ersten Zwischenpodest einerseits und an dem Rahmen des Ladekontaktelementträgerpodestes 1112 andererseits befestigt sind.

Die Federelemente gewährleisten in der Ruhelage die Ausrichtung des gesamten Ladekontaktelementträgerkopfes 1113 in einer mittleren und unverdrehten Position.

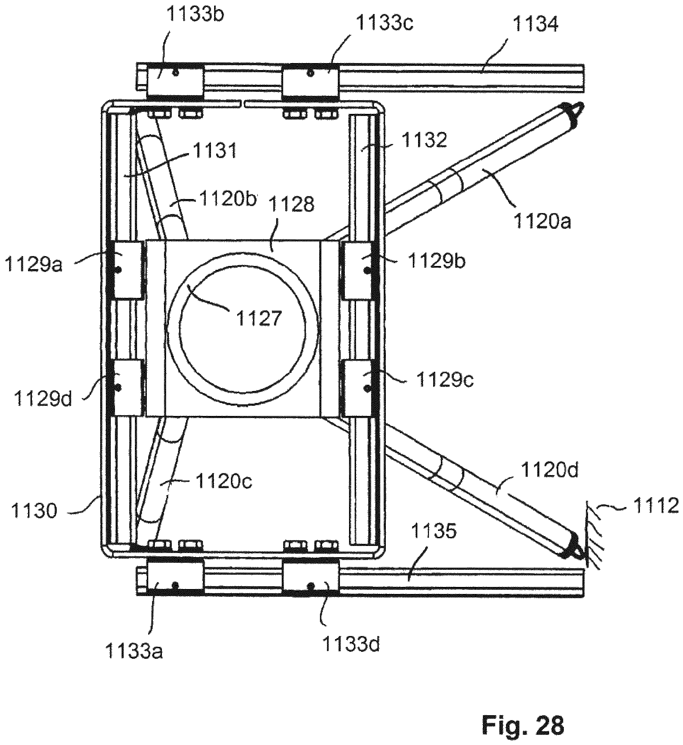

Wie in den Figuren 28, 29, 30 und 31 unter Weglassung übriger Elemente dargestellt, ist das Ladekontaktelementträgerpodest 1112, an dem Ladekontaktelementträgerkopf 1113 befestigt wird, derart ausgebildet, dass der Ladekontaktelementträgerkopf 1113 in einem Drehlager 1127 auf einem ersten Zwischenpodest 1128 sitzt. Das erste Zwischenpodest 1128 ist mittels vier Führungselementen 1129a, 1129b, 1129c und 1129d linear beweglich auf zwei Führungsschienen 1131, 1132 eines zweiten Zwischenpodestes 1130 geführt.

Das zweite Zwischenpodest 1130 ist seinerseits mittels vier Führungselementen 1133a, 1133b, 1133c, 1133d an zwei Führungsschienen 1134, 1135 linear beweglich geführt, welche ihrerseits an dem Ladekontaktelementträgerpodest 1112 oder genauer an dessen Rahmen befestigt sind. Die Führungsschienen1131, 1132 sind untereinander parallel und verlaufen vorzugsweise senkrecht zu den Führungsschienen 1134, 1135.

Die Ausrichtung des Ladekontaktelementträgerkopfes 1113 auf dem Ladekontaktelementträgerpodest 1112 in einer mittleren Position erfolgt durch die vier in verschiedenen Richtungen zwischen dem ersten Zwischenpodest 1128 und dem Ladekontaktelementträgerpodest 1112 gespannte elastische Elemente 1120a, 1120b,1120c und 1120d insbesondere in Form von Federbeinen aus einem nicht elektrisch leitfähigen Material oder Elastomersträngen.

Durch eine auf vier verschiedene Richtungen verteilte, insbesondere rotationssymmetrische Anordnung der vier elastischen Elemente 1120a, 1120b, 1120c und 1120d wird ein Kräftegleichgewicht und damit die mittige Positionierung sichergestellt.

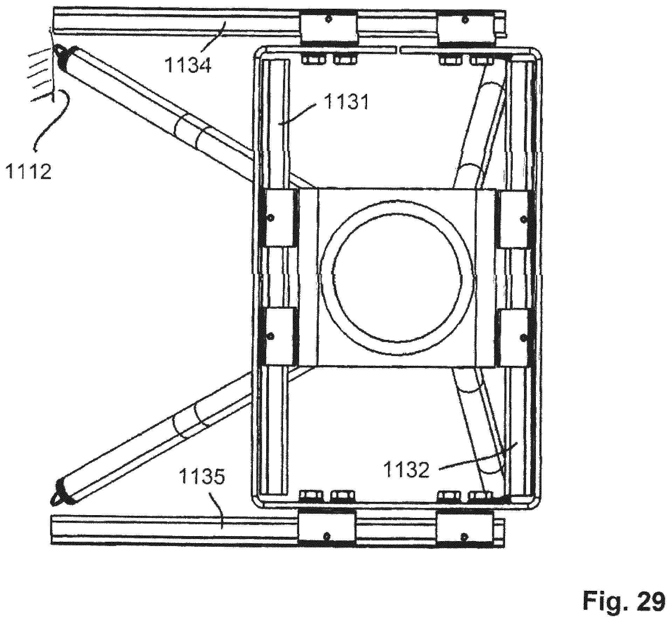

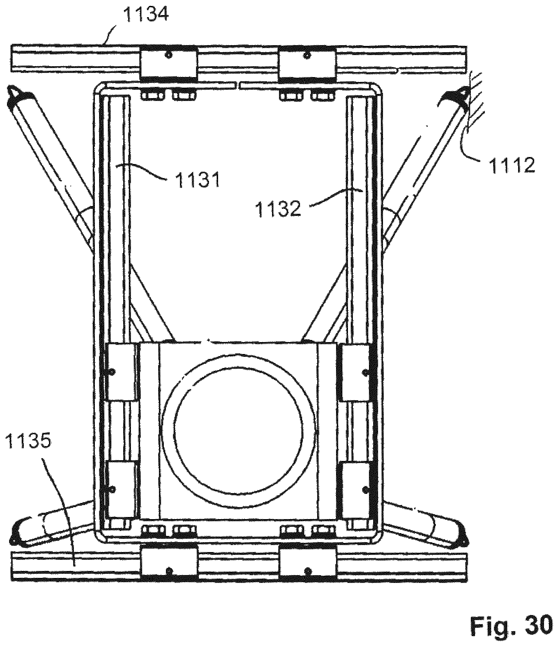

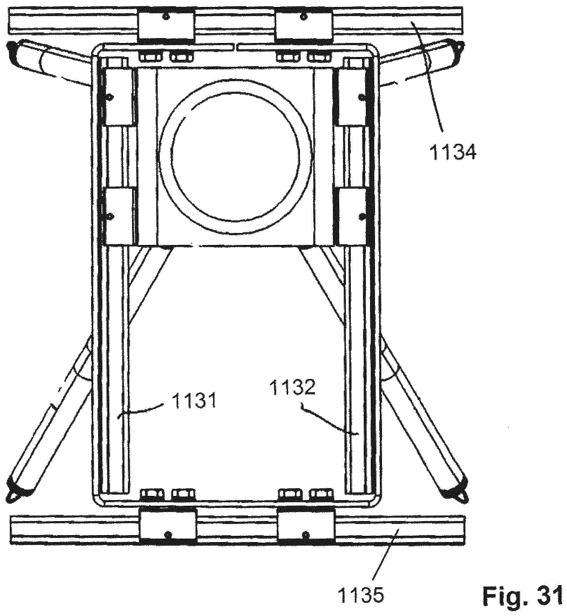

Die vier Figuren 28 bis 31 zeigen die Konstellation mit dem ersten und zweiten Zwischenpodest in vier verschiedenen Stellungen, wobei das erste Zwischenpodest 1128 in Figur 28 aus der Mitte nach links verschoben, in der Figur 29 nach rechts, in der Figur 30 nach unten und in der Figur 31 nach oben verschoben ist.

Durch die Positionierung der Ladekontaktelemente am Ladekontaktelementträgerkopf 1113 in der im Zusammenhang mit der in den Figuren 9 bis 12 und folgende erläuterten Form, die auch in diesem Ausführungsbeispiel Anwendung finden kann, bilden Kontaktvorrichtung 1200 und Ladekontakteinheit 1100 ein System, welches in seinen Eigenschaften folgende Ähnlichkeiten zu einem Stecker-Buchse-System aufweist:
- Stromübertragung nur in zulässigen Relativpositionen möglich;
- Verriegelung des Systems während der Stromübertragung;
- Kongruenz der Teilsysteme;
- Schutz vor Berührung (mindestens Einhaltung der Vorgabe "Prüffinger" der ECE R100), ohne dass ein zusätzliches Barriereelement benötigt wird.

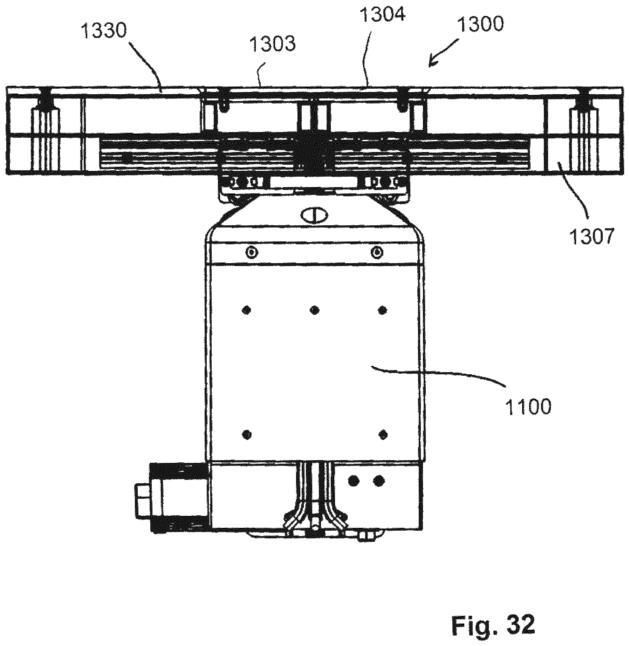

In der Figur 32 ist eine Ladekontakteinheit 1100 mit einer Fahrbahnabdeckung 1300 schematisch in einer Seitenansicht gezeigt. Ein Teil der Fahrbahnabdeckung ist der Anschlussrahmen 1307 mit einer auf diesem fest montierten Abdeckplatte 1330. Die Abdeckplatte 1330 weist eine Öffnung auf, die außerhalb des Betriebs durch zwei Abdeckelemente 1303, 1304 verschlossen ist. Die Abdeckelementträger 1303a und 1304 a, die die Abdeckelemente 1303 und 1304 tragen, sind in Schienen im Anschlussrahmen 1307 geführt, wie am besten aus der Figur 23 ersichtlich ist.

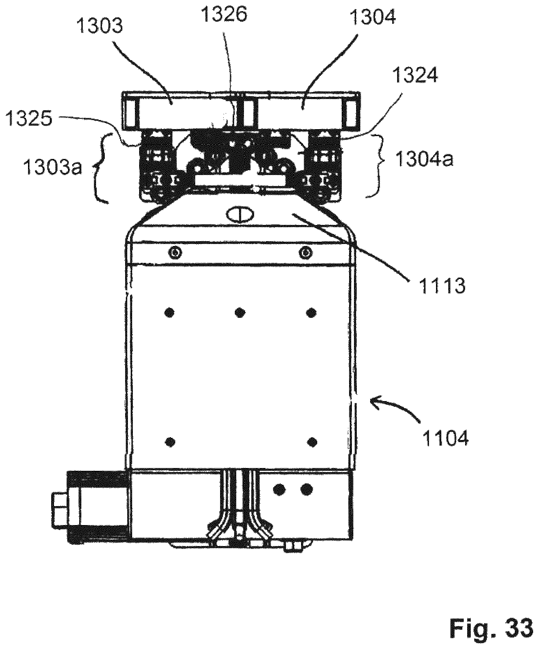

Die Figuren 33, 34 und 35 zeigen etwas detaillierter eine Seitenansicht des Ladekontaktelementträgers 1104 und eine Teils der Fahrbahnabdeckung mit den Abdeckelementträgern 1303a, 1304a, und den Abdeckelementen 1303, 1304. Aus der Figur ist erkennbar, dass die Abdeckelemente 1303, 1304 mittels elastischer Elemente 1324, 1325 schwimmend auf jeweils einem Abdeckelementträger 1303a, 1303b gelagert sind. Die Figuren 33, 34 und 35 zeigen die Abdeckelementträger, Abdeckelemente und einen Ladekontaktelementträgerkopf in drei verschiedenen Positionen.

Figur 33 zeigt den Ladekontaktelementträger 1104 mit dem Ladekontaktelementträgerkopf 1113 in einer Position unterhalb der Abdeckelementträger 1303a, 1304a unmittelbar an dem Punkt, an dem die Einlaufschrägen des pyramidenstumpfförmigen Ladekontaktelementträgerkopfes 1113 mit den Abrollelementen Kontakt aufnehmen, die hier als Serie von jeweils drei Rollen an jedem Abdeckelementträger ausgebildet sind. Von den Rollen ist die oberste Rolle des Abdeckelementträgers 1303a mit 1326 bezeichnet.

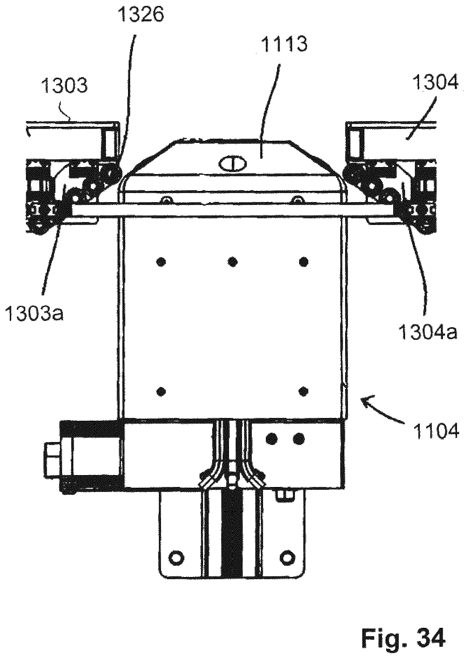

In der Figur 34 ist eine Zwischenposition dargestellt, in der der Ladekontaktelementträger 1104 bereits ein Stück weit zwischen den Abdeckelementträgern 1303a, 1304a hindurch gelaufen ist und diese dabei seitlich auseinandergedrückt hat. Die Einlaufschrägen des Ladekontaktelementträgerkopfes 1113 sind dabei mit mehreren Rollen gleichzeitig in Kontakt gekommen.

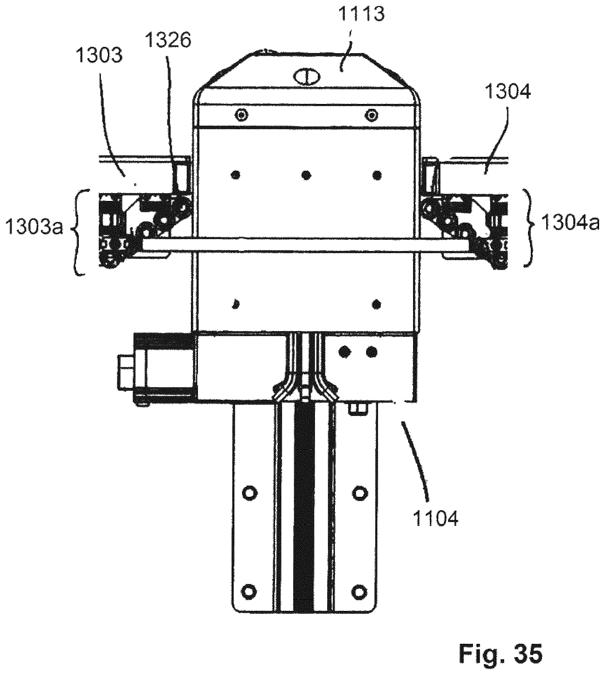

In der Figur 35 ist die Stellung gezeigt, in der der Ladekontaktelementträger 1104 weiter zwischen den Abdeckelementträgern 1303a, 1304a hindurch senkrecht nach oben gelaufen ist und der Ladekontaktelementträger kurz davor ist, mit einer nicht dargestellten Kontaktvorrichtung eines Kraftfahrzeugs in Kontakt zu treten.

Ein großer Vorteil der hier beschriebenen Konstruktion mit seitlich horizontalverschiebbaren Abdeckelementträgern und Abdeckelementen liegt darin, dass für die Funktion beim Laden einer Batterie eines Kraftfahrzeuges nur eine minimale Bodenfreiheit des Fahrzeugs erforderlich ist, weil die Abdeckelemente sich nicht über das Fahrbahnniveau erheben.

## Patentansprüche

1. Ladekontakteinheit (100, 1100) für ein Fahrzeug (1) mit mindestens einem elektrisch aufzuladenden Energiespeicher (3) zum Einbau unterhalb einer Fahrbahnoberfläche
mit einem Ladekontaktelementträgerkopf (113, 1113), der zum Zusammenwirken mit einer Kontaktvorrichtung (200, 1200) an der Unterseite eines Fahrzeugs eingerichtet ist, wobei die Kontaktgabe und die Kontakttrennung durch eine Relativbewegung des Ladekontaktelementträgerkopfes (113, 1113) und der Kontaktvorrichtung (200, 1200) entlang einer Kontaktierungsrichtung (6) erfolgt,
wobei der Ladekontaktelementträgerkopf (113, 1113) zum Ausgleich von Fehlpositionierungen entweder in einer oder mehreren quer zur Kontaktierungsrichtung (6) verlaufenden Richtungen innerhalb der Ladekontakteinheit (100, 1100) verschiebbar und/oder um die Kontaktierungsrichtung (6) dreh- oder schwenkbar ist, und
mit einer Hubvorrichtung (105) zum Anheben des Ladekontaktelementträgerkopfes (113, 1113),
**dadurch gekennzeichnet, dass**
in der Betriebsposition eine von der Hubvorrichtung (105) unabhängige Haltevorrichtung zum Halten des Ladekontaktelementträgerkopfes (113, 1113) an der Kontaktvorrichtung (200, 1200) in Form einer magnetischen Haltevorrichtung (204, 126) vorgesehen ist,
und wobei die magnetische Haltevorrichtung (204, 126) ein magnetisches Haltestück oder einen Elektromagneten am Ladekontaktelementträgerkopf (113, 1113) aufweist, der dazu eingerichtet ist, mit einem Gegenstück an der Kontaktvorrichtung (200, 1200) zusammenzuwirken und eine Verriegelung beider Teile zu erreichen,
und wobei die Hubvorrichtung (105) derart eingerichtet ist, dass sie die Abwärtsbewegung des Ladekontaktelementträgerkopfes (113, 1113) und der mit diesem in die Betriebsposition bewegbaren Teile (112) aus der Betriebsposition ohne einen Antrieb ermöglicht, wobei die Hubvorrichtung von dem Ladekontaktelementträgerkopf und den mit diesem in die Betriebsposition bewegbaren Teilen mechanisch entkoppelbar ist.

2. Ladekontakteinheit (100, 1100) nach Anspruch 1, **dadurch gekennzeichnet, dass** der Ladekontaktelementträgerkopf (113, 1113) gegen eine elastische Rückstellkraft verdreh- oder verschiebbar ist.

3. Ladekontakteinheit nach Anspruch 1 oder 2, **dadurch gekennzeichnet, dass** der Ladekontaktelementträgerkopf (113, 1113) auf einem Ladekontaktelementträgerpodest (112) oder Zwischenpodest (1130) in einer ersten Richtung verschiebbar gelagert ist und dass das Ladekontaktelementträgerpodest (112, 1112) oder Zwischenpodest (1130) innerhalb der Ladekontakteinheit (100, 1100) in einer zweiten Richtung verschiebbar gelagert ist.

4. Ladekontakteinheit nach Anspruch 1, 2 oder 3, **dadurch gekennzeichnet, dass** der Ladekontaktelementträgerkopf (113, 1113) auf dem Ladekontaktelementträgerpodest (112, 1112) oder Zwischenpodest (1130) mittels eines Drehlagerelementes (1127) gelagert ist, wobei zwischen dem Drehlagerelement und dem Ladekontaktelementträgerkopf (113, 1113) ein Drehlager angeordnet ist.

5. Ladekontakteinheit (100, 1100) nach Anspruch 1, **dadurch gekennzeichnet, dass** an dem Ladekontaktelementträgerkopf (113, 1113) eine oder mehrere Einlaufschräge(n) angeordnet sind, die bei der vertikalen Aufwärtsbewegung des Ladekontaktelementträgerkopfes ein oder mehrere Abdeckelemente (1303, 1304) oder Abdeckelementträger (1303a, 1304a) einer Fahrbahnabdeckung (1300) in horizontaler Richtung auslenkt/auslenken, so dass der Austritt des Ladekontaktelementträgers aus der Fahrbahnoberfläche (101) bis zum Kontaktschluss mit einer Kontaktvorrichtung (200, 1200) ermöglicht wird.

6. Ladekontakteinheit nach Anspruch 1 oder einem der folgenden, **dadurch gekennzeichnet, dass** die Hubvorrichtung (105) elektrisch, hydraulisch oder pneumatisch ausgebildet ist.

7. Ladekontakteinheit nach Anspruch 1 oder einem der folgenden, **dadurch gekennzeichnet, dass** eine Stoßdämpfvorrichtung (110, 111) zur Dämpfung einer Fallbewegung des Ladekontaktelementträgerkopfes (113, 1113) und der mit diesem in die Betriebsposition bewegbaren Teile (112) vorgesehen ist.

8. Ladekontakteinheit nach Anspruch 1 oder einem der folgenden, **dadurch gekennzeichnet, dass** sie eine Sensoreinrichtung aufweist, die dazu eingerichtet ist, die Position einer Kontaktvorrichtung (200, 1200) eines Fahrzeugs (1) relativ zu dem Ladekontaktelementträgerkopf (113, 1113), zu erfassen.

9. Fahrbahnabdeckung (300, 1300) für ein Kontaktsystem (100, 1100, 200, 1200, 300, 1300) mit einer Ladekontakteinheit (100, 1100), die einen vertikal antreibbaren Ladekontaktträgerkopf (113, 1113) gemäß einem der Patentansprüche 1 bis 5 aufweist und einer Kontaktvorrichtung (200, 1200) für elektrisch angetriebene und mit jeweils mindestens einem elektrisch aufzuladenden Energiespeicher (3) versehene Fahrzeuge (1), wobei die Fahrbahnabdeckung (300, 1300) in einer Vertiefung unterhalb einer Fahrbahnoberkante angeordnet ist, wobei die Fahrbahnabdeckung durch einen Anschlussrahmen (307, 1307) mit einem Schachtelement verbunden ist, wobei die Fahrbahnabdeckung (300, 1300) ein oder mehrere Abdeckelemente (303, 304, 1303, 1304) umfasst, die an dem Anschlussrahmen (307, 1307) gegen elastische Rückstellkräfte reversibel beweglich gelagert sind, wobei die Abdeckelemente (303, 304, 1303, 1304) relativ zu einem Ladekontaktelementträgerkopf (113, 1113) der Ladekontakteinheit so angeordnet sind, dass der Ladekontaktelementträgerkopf (113, 1113) bei seiner vertikalen Aufwärtsbewegung ein oder mehrere Abdeckelemente (303, 304, 1303) aus einer Verschlussposition auslenkt, so dass der Austritt des Ladekontaktelementträgers aus der Fahrbahnoberfläche (101) bis zum Kontaktschluss mit einer Kontaktvorrichtung (200, 1200) ermöglicht wird,
wobei die Fahrbahnabdeckung (300, 1300) eine oder mehrere Abdeckelementträger (1303a, 1304a) umfasst, die an dem Anschlussrahmen (1307) gegen elastische Rückstellkräfte reversibel verschiebbar gelagert sind, wobei die Abdeckelementträger (1303a, 1303b) Abdeckelemente (1303, 1304) tragen und relativ zu einem Ladekontaktelementträgerkopf (113, 1113) der Ladekontakteinheit so angeordnet sind, dass eine oder mehrere an dem Ladekontaktelementträgerkopf angeordnete Einlaufschräge(n) (1113a) bei der vertikalen Aufwärtsbewegung des Ladekontaktelementträgerkopfes ein oder mehrere Abdeckelementträger (1303a, 1304a) in horizontaler Richtung auslenkt/auslenken und so der Austritt des Ladekontaktelementträgers aus der Fahrbahnoberfläche (101) bis zum Kontaktschluss mit einer Kontaktvorrichtung (200, 1200) ermöglicht wird.

10. Fahrbahnabdeckung nach Anspruch 9, **dadurch gekennzeichnet, dass** an einem oder mehreren Abdeckelementträgern (1303a, 1304a) jeweils wenigstens ein Gleit- oder Abrollelement (1326) angeordnet ist, das im Verlauf der vertikalen Aufwärtsbewegung des Ladekontaktelementträgerkopfes (113, 1113) an einer an dem Ladekontaktelementträgerkopf angeordneten Einlaufschräge (1113a) abrollt oder gleitet und dadurch in Horizontalrichtung (1320, 1321) angetrieben wird.

11. Fahrbahnabdeckung nach Anspruch 10, **dadurch gekennzeichnet, dass** an einem oder mehreren Abdeckelementträgern jeweils wenigstens mehrere Gleit- oder Abrollelemente (1326) derart hintereinander angeordnet sind, dass sie im Verlauf der vertikalen Aufwärtsbewegung des Ladekontaktelementträgerkopfes (113, 1113) gleichzeitig oder nacheinander an einer an dem Ladekontaktelementträgerkopf (113, 1113) angeordneten Einlaufschräge (1113a) abrollen oder gleiten.

12. Fahrbahnabdeckung nach einem der Ansprüche 9 bis 11, **dadurch gekennzeichnet, dass** die Abdeckelemente (1303, 1304) mit den Abdeckelementträgern (1303a, 1304a) jeweils derart elastisch beweglich verbunden sind, dass die Abdeckelemente beim Überfahren durch das Gewicht eines Kraftfahrzeugs in vertikaler Richtung nach unten in den Anschlussrahmen (1307) pressbar sind, wobei der Anschlussrahmen einen Anschlag (1322) zur Begrenzung der Bewegung der Abdeckelemente (1303, 1304) in vertikaler Richtung bildet.

13. Ladekontakteinrichtung mit einer Ladekontakteinheit (100, 1100) gemäß einem der Ansprüche 1 bis 8 und mit einer Fahrbahnabdeckung nach einem der Ansprüche 9 bis 12, **dadurch gekennzeichnet, dass** der vertikal antreibbare Ladekontaktelementträgerkopf und die Fahrbahnabdeckung derart eingerichtet sind, dass der Ladekontaktelementträgerkopf bei seiner vertikalen Aufwärtsbewegung ein oder mehrere Abdeckelemente (303, 304, 1303) der Fahrbahnabdeckung aus ihrer Verschlussposition auslenkt.

## Claims

1. A charging contact unit (100, 1100) for a vehicle (1) having at least one energy store (3) to be charged electrically, for installation below a roadway surface
having a charging contact element carrier head (113, 1113) configured to interact with a contact apparatus (200, 1200) on the underside of a vehicle, the contact making and the contact separation being carried out by a relative movement of the charging contact element carrier head (113, 1113) and the contact apparatus (200, 1200) along a contacting direction (6),
the charging contact element carrier head (113, 1113) being able to be displaced either in one or more directions running transversely to the contacting direction (6) within the charging contact unit (100, 1100) and/or rotated or pivoted about the contacting direction (6) for compensating for incorrect positioning, and
having a lifting apparatus (105) for lifting the charging contact element carrier head (113, 1113),
**characterized in that**
in the operating position, a holding apparatus independent of the lifting apparatus (105) for holding the charging contact element carrier head (113, 1113) on the contact apparatus (200, 1200) is provided in the form of a magnetic holding apparatus (204, 126),
and wherein the magnetic holding apparatus (204, 126) has a magnetic holding piece or an electromagnet on the charging contact element carrier head (113, 1113), which is configured to interact with a counterpart of the contact apparatus (200, 1200) and to achieve locking of both parts,
and wherein the lifting apparatus (105) is configured such that it enables the downward movement of the charging contact element carrier head (113, 1113) and the parts (112) that can be moved therewith into the operating position from the operating position without a drive, wherein the lifting apparatus can be mechanically decoupled from the charging contact element carrier head and the parts that can be moved into the operating position therewith.

2. The charging contact unit (100, 1100) according to claim 1, **characterized in that** the charging contact element carrier head (113, 1113) can be rotated or displaced against an elastic restoring force.

3. The charging contact unit according to claim 1 or 2, **characterized in that** the charging contact element carrier head (113, 1113) is mounted displaceably in a first direction on a charging contact element carrier pedestal (112) or intermediate pedestal (1130) and that the charging contact element carrier pedestal (112, 1112) or intermediate pedestal (1130) is mounted displaceably within the charging contact unit (100, 1100) in a second direction.

4. The charging contact unit according to claim 1, 2 or 3, **characterized in that** the charging contact element carrier head (113, 1113) is mounted on the charging contact element carrier pedestal (112, 1112) or intermediate pedestal (1130) by means of a pivot bearing element (1127), wherein a pivot bearing is arranged between the pivot bearing element and the charging contact element carrier head (113, 1113).

5. The charging contact unit (100, 1100) according to claim 1, **characterized in that** one or more inlet incline(s) are arranged on the charging contact element carrier head (113, 1113), the inlet incline(s) deflecting one or more cover elements (1303, 1304) or cover element carriers (1303a, 1304a) of a roadway cover (1300) in the horizontal direction during the vertical upward movement of the charging contact element carrier head, so that the exit of the charging contact element carrier from the roadway surface (101) is made possible until contact is made with a contact apparatus (200, 1200).

6. The charging contact unit according to claim 1 or any one of the following, **characterized in that** the lifting apparatus (105) is designed to be electric, hydraulic or pneumatic.

7. The charging contact unit according to claim 1 or any one of the following, **characterized in that** a impact damping apparatus (110, 111) is provided for damping a falling movement of the charging contact element carrier head (113, 1113) and the parts (112) movable into the operating position therewith.

8. The charging contact unit according to claim 1 or any one of the following, **characterized in that** it has a sensor device configured to detect the position of a contact apparatus (200, 1200) of a vehicle (1) relative to the charging contact element carrier head (113, 1113).

9. A roadway cover (300, 1300) for a contact system (100, 1100, 200, 1200, 300, 1300) having a charging contact unit (100, 1100) having a vertically drivable charging contact carrier head (113, 1113) according to any one of claims 1 to 5 and a contact apparatus (200, 1200) for electrically driven vehicles (1) each provided with at least one energy store (3) to be charged electrically, the roadway cover (300, 1300) being arranged in an indentation below a roadway top edge, the roadway cover being connected to a shaft element by a connection frame (307, 1307), the roadway cover (300, 1300) comprising one or more cover elements (303, 304, 1303, 1304) mounted on the connection frame (307, 1307) so that they can be moved reversibly against elastic restoring forces, the cover elements (303, 304, 1303, 1304) being arranged relative to a charging contact element carrier head (113, 1113) of the charging contact unit such that the charging contact element carrier head (113, 1113), during its vertical upward movement, deflects one or more cover elements (303, 304, 1303), from a closed position, so that the exit of the charging contact element carrier from the roadway surface (101) is made possible until contact is made with a contact apparatus (200, 1200),
wherein the roadway cover (300, 1300) comprises one or more cover element carriers (1303a, 1304a) mounted on the connection frame (1307) so that they can be displaced reversibly against elastic restoring forces, the cover element carriers (1303a, 1303b) carrying cover elements (1303, 1304) and being arranged relative to a charging contact element carrier head (113, 1113) of the charging contact unit such that one or more inlet incline(s) (1113a) arranged on the charging contact element carrier head deflect(s) one or more cover element carriers (1303a, 1304a) in the horizontal direction during the vertical upward movement of the charging contact element carrier head, thus making possible the deployment of the charging contact element carrier from the roadway surface (101) until it makes contact with a contact apparatus (200, 1200).

10. The roadway cover according to claim 9, **characterized in that** at least one sliding or rolling element (1326) is arranged on one or more cover element carriers (1303a, 1304a), said sliding or rolling element rolling or sliding in the course of the vertical upward movement of the charging contact element carrier head (113, 1113) on an inlet incline (1113a) arranged on the charging contact element carrier head, thereby being driven in the horizontal direction (1320, 1321).

11. The roadway cover according to claim 10, **characterized in that** at least a plurality of sliding or rolling elements (1326) are arranged one behind the other on one or more cover element carriers such that in the course of the vertical upward movement of the charging contact element carrier head (113, 1113), said sliding or rolling elements roll or slide simultaneously or successively on an inlet incline (1113a) arranged on the charging contact element carrier head (113, 1113).

12. The roadway cover according to any one of claims 9 to 11, **characterized in that** the cover elements (1303, 1304) are each connected to the cover element carriers (1303a, 1304a) such that they can be moved elastically such that the cover elements can be pressed vertically downwards into the connection frame (1307) when the weight of a motor vehicle drives over them, wherein the connection frame forms a stop (1322) for limiting the movement of the cover elements (1303, 1304) in the vertical direction.

13. A charging contact device having a charging contact unit (100, 1100) according to any one of claims 1 to 8 and having a roadway cover according to any one of claims 9 to 12, **characterized in that** the vertically drivable charging contact element carrier head and the roadway cover are configured such that the charging contact element carrier head, during its vertical upward movement, deflects one or more cover elements (303, 304, 1303) of the roadway cover from their locking position.

## Revendications

1. Unité de contact de charge (100, 1100) destinée à un véhicule (1) avec au moins un accumulateur d'énergie (3) à charger électriquement, prévue pour le montage en-dessous d'une surface d'une chaussée
pourvue d'une tête de support d'élément de contact de charge (113, 1113), qui est conçue pour agir conjointement avec un dispositif de contact (200, 1200) sur la face inférieure d'un véhicule, où l'établissement du contact et la coupure du contact ont lieu par un mouvement relatif de la tête de support d'élément de contact de charge (113, 1113) et du dispositif de contact (200, 1200) le long d'une direction de mise en contact (6),
dans laquelle la tête de support d'élément de contact de charge (113, 1113) peut être déplacée, pour la compensation de mauvais positionnements, soit dans une ou plusieurs directions s'étendant perpendiculairement par rapport à la direction de mise en contact (6) à l'intérieur de l'unité de contact de charge (100, 1100) et/ou peut être mise en rotation ou être pivotée autour de la direction de mise en contact (6), et
pourvue d'un dispositif de levage (105) pour lever la tête de support d'élément de contact de charge (113, 1113),
**caractérisée en ce que**,
dans la position de fonctionnement, un dispositif de support indépendant du dispositif de levage (105) est prévu pour le maintien de la tête de support d'élément de contact de charge (113, 1113) sur le dispositif de contact (200, 1200) sous la forme d'un dispositif de support (204, 126) magnétique,
et où le dispositif de support (204, 126) magnétique présente une pièce support magnétique ou un électro-aimant sur la tête de support d'élément de contact de charge (113, 1113) qui est conçu pour agir conjointement avec une pièce complémentaire du dispositif de contact (200, 1200) et pour arriver à un verrouillage des deux pièces,
et dans laquelle le dispositif de levage (105) est conçu de telle manière qu'il permet le déplacement vers le bas de la tête de support d'élément de contact de charge (113, 1113) et des parties mobiles (112) avec celle-ci vers la position de fonctionnement à partir de la position de fonctionnement sans aucun entraînement, où le dispositif de levage peut être désaccouplé mécaniquement de la tête de support d'élément de contact de charge et des parties mobiles avec celle-ci vers la position de fonctionnement.

2. Unité de contact de charge (100, 1100) selon la revendication 1, **caractérisée en ce que** la tête de support d'élément de contact de charge (113, 1113) peut être tournée ou coulissée à l'encontre d'une force de rappel élastique.

3. Unité de contact de charge selon la revendication 1 ou la revendication 2, **caractérisée en ce que** la tête de support d'élément de contact de charge (113, 1113) est logée en pouvant coulisser dans une première direction sur un podium de support d'élément de contact de charge (112) ou un podium intermédiaire (1130) et que le podium de support d'élément de contact de charge (112, 1112) ou le podium intermédiaire (1130) à l'intérieur de l'unité de contact de charge (100, 1100) est logé en pouvant coulisser dans une deuxième direction.

4. Unité de contact de charge selon la revendication 1, la revendication 2 ou la revendication 3, **caractérisée en ce que** la tête de support d'élément de contact de charge (113, 1113) est logée sur le podium de support d'élément de contact de charge (112, 1112) ou le podium intermédiaire (1130) au moyen d'un élément palier de roulement (1127), un palier de roulement étant disposé entre l'élément de palier de roulement et la tête de support d'élément de contact de charge (113, 1113).

5. Unité de contact de charge (100, 1100) selon la revendication 1, **caractérisée en ce qu'**une ou plusieurs rampes d'entrée sont disposées sur la tête de support d'élément de contact de charge (113, 1113), qui font sortir en direction horizontale un ou plusieurs éléments de recouvrement (1303, 1304) ou supports d'éléments de recouvrement (1303a, 1304a) d'un revêtement de chaussée (1300) lors du mouvement vers le haut vertical de la tête de support d'élément de contact de charge, de sorte que la sortie du support d'élément de contact de charge hors de la surface de la chaussée (101) est rendue possible jusqu'à la coupure de contact avec un dispositif de contact (200, 1200).

6. Unité de contact de charge selon la revendication 1 ou l'une des suivantes, **caractérisée en ce que** le dispositif de levage (105) est conçu électrique, hydraulique ou pneumatique.

7. Unité de contact de charge selon la revendication 1 ou l'une des suivantes, **caractérisée en ce qu'**un dispositif amortisseur de chocs (110, 111) est prévu pour l'amortissement d'un mauvais déplacement de la tête de support d'élément de contact de charge (113, 1113) et avec elle des parties (112) mobiles vers la position de fonctionnement.

8. Unité de contact de charge selon la revendication 1 ou l'une des suivantes, **caractérisée en ce qu'**elle présente un dispositif capteur qui est conçu pour détecter la position d'un dispositif de contact (200, 1200) d'un véhicule (1) par rapport à la tête de support d'élément de contact de charge (113, 1113).

9. Revêtement de chaussée (300, 1300) pour un système de contact (100, 1100, 200, 1200, 300, 1300) pourvu d'une unité de contact de charge (100, 1100) qui présente une tête de support de contact de charge (113, 1113) selon l'une des revendications 1 à 5 pouvant être entraînée verticalement et un dispositif de contact (200, 1200) pour des véhicules (1) électriques et munis respectivement d'au moins un accumulateur d'énergie (3) à recharger électriquement, où le revêtement de chaussée (300, 1300) est disposé dans une cavité en-dessous d'un bord supérieur de chaussée, où le revêtement de chaussée est relié par un cadre de raccordement (307, 1307) avec un élément en boîte, où le revêtement de chaussée (300, 1300) comprend un ou plusieurs éléments de revêtement (303, 304, 1303, 1304) qui sont logés en étant mobiles de manière réversible sur le cadre de raccordement (307, 1307) à l'encontre de forces de retour élastiques, où les éléments de revêtement (303, 304, 1303, 1304) sont disposés par rapport à une tête de support d'élément de contact de charge (113, 1113) de l'unité de contact de charge de sorte que la tête de support d'élément de contact de charge (113, 1113) dévie, lors d'un mouvement vers le haut vertical d'un ou de plusieurs éléments de revêtement (303, 304, 1303), en partant d'une position de fermeture, de sorte que la sortie du support d'élément de contact de charge de la surface de la chaussée (101) est rendue possible jusque'à l'établissement du contact avec un dispositif de contact (200, 1200),
où le revêtement de chaussée (300, 1300) comprend un ou plusieurs supports d'élément de revêtement (1303a, 1304a) qui sont logés en pouvant coulisser de manière réversible sur le cadre de raccordement (1307) à l'encontre de forces de rappel élastiques, où les supports d'éléments de revêtement (1303a, 1303b) portent des éléments de revêtement (1303, 1304) et sont disposés relativement par rapport à une tête de support d'élément de contact de charge (113, 1113) de l'unité de contact de charge, de sorte qu'une ou plusieurs rampes d'entrée (1113a) disposées sur la tête de support d'élément de contact de charge font dévier, lors du mouvement vers le haut verticale de la tête de support d'élément de contact de charge, un ou plusieurs supports d'élément de revêtement (1303a, 1304a) dans la direction horizontale et que la sortie du support d'élément de contact de charge est rendue possible hors de la surface de la chaussée (101) jusqu'à l'établissement du contact avec un dispositif de contact (200, 1200).

10. Revêtement de chaussée selon la revendication 9, **caractérisé en ce qu'**au moins un élément de glissement ou de déroulement (1326) est respectivement disposé sur un ou plusieurs supports d'élément de revêtement (1303a, 1304a) qui se déroule ou glisse pendant le déroulement du mouvement vers le haut vertical de la tête de support d'élément de contact de charge (113, 1113) sur une rampe d'entrée (1113a) disposées sur la tête de support d'élément de contact de charge et qu'ainsi est entraîné en direction horizontale (1320, 1321).

11. Revêtement de chaussée selon la revendication 10, **caractérisé en ce qu'**au moins plusieurs éléments de glissement ou de déroulement (1326) sont respectivement disposés les uns derrière les autres sur un ou plusieurs supports d'éléments de revêtement, de telle manière qu'ils se déroulent ou glissent pendant le déroulement du mouvement vers le haut vertical de la tête de support d'élément de contact de charge (113, 1113) simultanément ou les uns derrière les autres sur une rampe d'entrée (1113a) disposée sur la tête de support d'élément de contact de charge (113, 1113).

12. Revêtement de chaussée selon l'une des revendications 9 à 11, **caractérisé en ce que** les éléments de revêtement (1303, 1304) sont respectivement reliés mobiles de manière élastique avec les supports d'éléments de revêtement (1303a, 1304a) de sorte que les éléments de revêtement, lors du passage par le poids d'un camion, peuvent être pressés vers le bas en direction verticale dans le cadre de raccordement (1307), où le cadre de raccordement forme une butée (1322) pour limiter le déplacement des éléments de revêtement (1303, 1304) en direction verticale.

13. Dispositif de contact de charge pourvu d'une unité de contact de charge (100, 1100) selon l'une des revendications 1 à 8 et d'un revêtement de chaussée selon l'une des revendications 9 à 12, **caractérisé en ce que** la tête de support d'élément de contact de charge pouvant être entraînée verticalement et le revêtement de chaussée sont conçus de telle manière que la tête de support d'élément de contact de charge fait dévier de leur position de fermeture, lors de son déplacement vers le haut vertical, un ou plusieurs éléments de revêtement (303, 304, 1303) du revêtement de chaussée.
